# EUROPEAN PATENT APPLICATION

(11) **EP 4 661 511 A1**
(43) Date of publication of application: **10.12.2025**
(21) Application number: 23922462.9
(22) Date of filing: 06.12.2023
(51) Int. Cl.: H04W 52/02

(54) **COMMUNICATION METHOD, NETWORK DEVICE, COMMUNICATION SYSTEM, MEDIUM, CHIP, AND PROGRAM PRODUCT**

(30) Priority: 17.02.2023 CN 202310154248
(71) Applicant: Huawei Technologies Co., Ltd., Shenzhen, Guangdong 518129 (CN)
(72) Inventor: MA, Chuan, Shenzhen, Guangdong 518129 (CN); HAN, Feng, Shenzhen, Guangdong 518129 (CN); HU, Jinna, Shenzhen, Guangdong 518129 (CN); ZHENG, Lili, Shenzhen, Guangdong 518129 (CN)
(74) Representative: Goddar, Heinz J.
(86) International application number: PCT/CN2023/136899
(87) International publication number: WO 2024/169346

(57) **Abstract**

Embodiments of this application relate to a communication method, a network device, a communication system, a computer-readable storage medium, a chip, and a computer program product. The communication method includes: A first network device obtains first information of a terminal device, where the first information indicates at least one synchronization signal block SSB used to page the terminal device. The communication method further includes: The first network device transmits, to a second network device, a paging message used to page the terminal device, where the paging message includes the first information. In this manner, when paging UE, the first network device and/or the second network device may determine, based on the foregoing information, SSBs on which the UE is to be paged, for example, the UE is to be paged only on the SSB included in the first information, and do/does not need to page the UE on all SSBs, thereby reducing energy consumption during network paging.

## Description

### TECHNICAL FIELD

This application relates to the communication field, and more specifically, to a communication method, a network device, a communication system, a computer-readable storage medium, a chip, and a computer program product.

### BACKGROUND

When a network has signaling or data to send to user equipment (User Equipment, UE, also referred to as a "terminal device") in a radio resource control idle (Radio Resource Control Idle, RRC_IDLE) state or a radio resource control inactive (RRC_INACTIVE) state, the network typically first sends a core network (Core Network, CN) paging message or a radio access network (Radio Access Network, RAN) paging message to the UE, to trigger the UE to establish an RRC connection to a base station (Base Station, BS), for the UE to enter a radio resource control connected (RRC_CONNECTED) state, after which signaling or data transmission with the UE proceed.

However, regardless of core network (CN) paging or radio access network (RAN) paging, when the BS transmits a paging message in a cell, the BS transmits the paging message on each synchronization signal block (Synchronization Signal Block, SSB) within the cell. To be specific, if a cell includes N SSBs (for example, N=4, 8, 16, 32, or 64), the BS needs to transmit N paging messages in the cell, causing unnecessary signaling overheads and power consumption to the network and users.

### SUMMARY

In view of this, embodiments of this application provide a communication method, a network device, a communication system, a computer-readable storage medium, a chip, and a computer program product.

According to a first aspect, a communication method is provided. The method includes: A first network device obtains first information of a terminal device, where the first information indicates at least one synchronization signal block (SSB) used to page the terminal device; and the first network device transmits, to a second network device, a paging message used to page the terminal device, where the paging message includes the first information. In this manner, when paging the UE, the first network device and/or the second network device may determine, based on the first information, SSBs on which the terminal device is to be paged (for example, the terminal device is to be paged only on the SSB included in the first information), and do/does not need to page the terminal device on all SSBs, thereby reducing energy consumption during network paging.

In some embodiments of the first aspect, the first information includes information about the at least one SSB, and information about an SSB in the at least one synchronization signal block (SSB) includes a cell identity that indicates a cell to which the SSB belongs, and an index of the SSB. In this manner, when paging the terminal device, the first network device and/or the second network device may determine, based on the first information, SSBs on which the terminal device is to be paged (for example, the terminal device is to be paged only on the SSB included in the first information), and do/does not need to page the terminal device on all SSBs, thereby reducing energy consumption during network paging.

In some embodiments of the first aspect, the cell identity is a cell global identity (Cell Global Identity, CGI). In this manner, when paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, the information about the SSB further includes second information, and the second information indicates that the SSB is an SSB last used by the terminal device, or the SSB is an SSB not last used by the terminal device. In this manner, when paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, the information about the SSB further includes information about stay time of the terminal device on the SSB. In this manner, when paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, the information about the SSB further includes third information, and the third information indicates that the SSB is a synchronization signal block (SSB) that has been visited by the terminal device, or the synchronization signal block (SSB) is a synchronization signal block (SSB) that has not been visited by the terminal device. In this manner, when paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, a synchronization signal block (SSB) that has not been visited by the terminal device is a synchronization signal block (SSB) adjacent to a synchronization signal block (SSB) that has been visited by the terminal device. In this manner, when paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, in the first information, synchronization signal blocks (SSBs) that have been visited by the terminal device are arranged in a sequence in which the terminal device visits the synchronization signal blocks (SSBs). In this manner, when paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, in the first information, a synchronization signal block (SSB) that has not been visited by the terminal device is after a synchronization signal block (SSB) that has been visited by the terminal device, and the SSB that has not been visited by the terminal device is associated with the SSB that has been visited by the terminal device. In this manner, when paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, the first information includes information about at least one cell, the information about the at least one cell includes information about the synchronization signal block (SSB) used to page the terminal device, the at least one cell includes a cell that has been visited by the terminal device, and information about a cell in the at least one cell includes a cell identity. In this manner, when paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, the at least one cell further includes a cell that has not been visited by the terminal device, and the cell that has not been visited by the terminal device is a cell adjacent to a cell that has been visited by the terminal device. In this manner, when paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, the information about the cell further includes an index of the synchronization signal block (SSB). In this manner, when paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, the information about the cell further includes fourth information, and the fourth information indicates that the synchronization signal block (SSB) is a synchronization signal block (SSB) that has been visited by the terminal device, or the synchronization signal block (SSB) is a synchronization signal block (SSB) that has not been visited by the terminal device. In this manner, when paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, the information about the cell further includes information about stay time of the terminal device on the synchronization signal block (SSB). In this manner, when paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, in the first information, cells that have been visited by the terminal device are arranged in a sequence in which the terminal device visits the cells. In this manner, when paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, in the first information, a cell that has not been visited by the terminal device is after a cell that has been visited by the terminal device, and the cell that has not been visited by the terminal device is associated with the cell that has been visited by the terminal device. In this manner, when paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, the first network device is an access and mobility management function (Access and Mobility Management Function, AMF) in a core network. In this manner, when paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, the communication method further includes: The first network device (namely, the AMF) receives, from a third network device, information including the first information, and the first network device obtains the first information. In this manner, when a network releases a UE context corresponding to the terminal device, the third network device notifies the first network device of information about an SSB that last serves the terminal device and/or information about an SSB on which the terminal device may stay, and the first network device forwards the information to the second network device (the second network device may be the third network device, or may not be the third network device). When paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, the information from the third network device is carried in at least one of the following: a UE context release complete message, a UE context suspend request, a UE context resume request, or a message other than a UE context release complete message, a UE context suspend request, or a UE context resume request. In this manner, when a network releases a UE context corresponding to the terminal device, the third network device notifies the first network device (namely, the AMF) of information about an SSB that last serves the terminal device and/or information about an SSB on which the UE may stay, and the first network device forwards the information to the second network device (the second network device may be the third network device, or may not be the third network device). When paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, that the first network device transmits the paging message to the second network device includes: The first network device (namely, the AMF) parses the information from the third network device, and transmits the paging message to the second network device; or the first network device forwards the paging message to the second network device without parsing the information from the third network device. In this manner, when a network releases a UE context corresponding to the terminal device, the third network device notifies the first network device of information about an SSB that last serves the terminal device and/or information about an SSB on which the terminal device may stay, and the first network device forwards the information to the second network device (the second network device may be the third network device, or may not be the third network device). When paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, the third network device is a network device that last serves the terminal device. In this manner, when a network releases a UE context corresponding to the terminal device, the third network device notifies the first network device (namely, the AMF) of information about an SSB that last serves the terminal device and/or information about an SSB on which the UE may stay, and the first network device forwards the information to the second network device (the second network device may be the third network device, or may not be the third network device). When paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, the second network device is at least one of the following: the third network device, or a network device that is in a tracking area of the terminal device and that is different from the third network device. In this manner, when a network releases a UE context corresponding to the terminal device, the third network device notifies the first network device (namely, the AMF) of information about an SSB that last serves the terminal device and/or information about an SSB on which the terminal device may stay, and the first network device forwards the information to the second network device (the second network device may be the third network device, or may not be the third network device). When paging the terminal device, the first network device and/or the second network device may determine, based on the foregoing information, SSBs on which the terminal device is to be paged, and do/does not need to page the terminal device on all SSBs, thereby reducing energy consumption during network paging.

In some embodiments of the first aspect, the third network device is one of the following: a base station in a non-split architecture, or a central unit (Centralized Unit, CU) of a base station in a split architecture. In this manner, when a network releases a UE context corresponding to the terminal device, the third network device notifies the first network device (namely, the AMF) of information about an SSB that last serves the terminal device and/or information about an SSB on which the terminal device may stay, and the first network device forwards the information to the second network device (the second network device may be the third network device, or may not be the third network device). When paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, when the third network device is the central unit (CU) of the base station in the split architecture, the information from the third network device is obtained by the third network device from a distributed unit (Distributed Unit, DU) of the base station in the split architecture. In this manner, when a network releases a UE context corresponding to the terminal device, the third network device notifies the first network device (namely, the AMF) of information about an SSB that last serves the terminal device and/or information about an SSB on which the terminal device may stay, and the first network device forwards the information to the second network device (the second network device may be the third network device, or may not be the third network device). When paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, the first network device is a network device in an access network, and obtaining the first information of the terminal device includes: The first network device locally determines the first information. In this manner, when paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, the first network device is a central unit (CU) of a base station in a split architecture, and the communication method further includes: The first network device receives information from a distributed unit DU of the base station in the split architecture, where the information from the distributed unit DU includes the first information, and that the first network device obtains the first information includes: The first network device obtains the first information based on the information from the distributed unit DU. In this manner, when paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, the second network device and the first network device are in a same radio access network area. In this manner, when paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, the second network device is a base station in a non-split architecture, and the first information is transmitted by the second network device to the terminal device. In this manner, when paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, the second network device is a central unit (CU) of a base station in a split architecture, and the first information is forwarded by the second network device to a distributed unit (DU) of the base station in the split architecture. In this manner, when paging the terminal device, the first network device and/or the second network device may determine, based on the first information, SSBs on which the terminal device is to be paged, and do/does not need to page the terminal device on all SSBs, thereby reducing energy consumption during network paging.

In some embodiments of the first aspect, a sequence of synchronization signal blocks (SSBs) in the first information indicates a sequence in which the second network device pages the terminal device on the synchronization signal blocks (SSBs). In this manner, when paging the terminal device, the first network device and/or the second network device may determine, based on the first information, SSBs on which the terminal device is to be paged, and do/does not need to page the terminal device on all SSBs, thereby reducing energy consumption during network paging.

According to a second aspect, a communication method is provided. For beneficial effect, refer to descriptions of the first aspect. Details are not described herein again. The communication method includes: A second network device receives, from a first network device, a first paging message used to page a terminal device, where the first paging message includes first information, and the first information indicates at least one synchronization signal block (SSB) used to page the terminal device; the second network device determines, based on the first information, at least one SSB used to transmit a second paging message to the terminal device; and the second network device transmits the second paging message to the terminal device on the at least one determined SSB.

In some embodiments of the second aspect, determining the at least one SSB used to transmit the second paging message to the terminal device includes: The second network device selects, from the first information based on a cell identity of a cell associated with the second network device, the at least one SSB used to transmit the second paging message to the terminal device.

In some embodiments of the second aspect, the first information includes information about the at least one determined SSB, and information about an SSB in the at least one determined synchronization signal block (SSB) includes a cell identity that indicates a cell to which the SSB belongs, and an index of the SSB.

In some embodiments of the second aspect, the cell identity is a cell global identity (CGI).

In some embodiments of the second aspect, the information about the SSB further includes second information, and the second information indicates that the SSB is an SSB last used by the terminal device, or the SSB is an SSB not last used by the terminal device.

In some embodiments of the second aspect, the information about the SSB further includes information about stay time of the terminal device on the SSB.

In some embodiments of the second aspect, the information about the SSB further includes third information, and the third information indicates that the SSB is a synchronization signal block (SSB) that has been visited by the terminal device, or the synchronization signal block (SSB) is a synchronization signal block (SSB) that has not been visited by the terminal device.

In some embodiments of the second aspect, a synchronization signal block (SSB) that has not been visited by the terminal device is a synchronization signal block (SSB) adjacent to a synchronization signal block (SSB) that has been visited by the terminal device.

In some embodiments of the second aspect, in the first information, synchronization signal blocks (SSBs) that have been visited by the terminal device are arranged in a sequence in which the terminal device visits the synchronization signal blocks (SSBs).

In some embodiments of the second aspect, in the first information, a synchronization signal block (SSB) that has not been visited by the terminal device is after a synchronization signal block (SSB) that has been visited by the terminal device, and the synchronization signal block (SSB) that has not been visited by the terminal device is associated with the synchronization signal block (SSB) that has been visited by the terminal device.

In some embodiments of the second aspect, the first information includes information about at least one cell, the information about the at least one cell includes information about the synchronization signal block (SSB) used to page the terminal device, the at least one cell includes a cell that has been visited by the terminal device, and information about a cell in the at least one cell includes a cell identity.

In some embodiments of the second aspect, the at least one cell further includes a cell that has not been visited by the terminal device, and the cell that has not been visited by the terminal device is a cell adjacent to a cell that has been visited by the terminal device.

In some embodiments of the second aspect, the information about the cell further includes an index of the synchronization signal block (SSB).

In some embodiments of the second aspect, the information about the cell further includes fourth information, and the fourth information indicates that the synchronization signal block (SSB) is a synchronization signal block (SSB) that has been visited by the terminal device, or the synchronization signal block (SSB) is a synchronization signal block (SSB) that has not been visited by the terminal device.

In some embodiments of the second aspect, the information about the cell further includes information about stay time of the terminal device on the synchronization signal block (SSB).

In some embodiments of the second aspect, in the first information, cells that have been visited by the terminal device are arranged in a sequence in which the terminal device visits the cells.

In some embodiments of the second aspect, in the first information, a cell that has not been visited by the terminal device is after an associated cell that has been visited by the terminal device, and the cell that has not been visited by the terminal device is associated with the cell that has been visited by the terminal device.

In some embodiments of the second aspect, the first network device is one of the following: an access and mobility management function AMF in a core network, a base station in a non-split architecture, or a central unit (CU) of a base station in a split architecture.

In some embodiments of the second aspect, the second network device and the first network device are in a same radio access network area.

In some embodiments of the second aspect, a sequence of synchronization signal blocks (SSBs) in the first information indicates a sequence in which the second network device pages the terminal device on the synchronization signal blocks (SSBs).

According to a third aspect, a first communication apparatus is provided. The first communication apparatus includes a processor and a memory. The memory stores instructions executed by the processor. When the instructions are executed by the processor, the first communication apparatus is caused to implement the method according to any one of the possible implementations of the first aspect.

According to a fourth aspect, a second communication apparatus is provided. The second communication apparatus includes a processor and a memory. The memory stores instructions executed by the processor. When the instructions are executed by the processor, the second communication apparatus is caused to implement the method according to any one of the possible implementations of the second aspect.

According to a fifth aspect, a communication system is provided. The communication system includes a first communication apparatus and a second communication apparatus, and is configured to implement the method according to any one of the possible implementations of the first aspect or the second aspect by using the first communication apparatus and the second communication apparatus.

According to a sixth aspect, a computer-readable storage medium is provided. The computer-readable storage medium stores a computer program. When the computer program is executed by a processor, the method according to any one of the possible implementations of the first aspect or the second aspect is implemented.

According to a seventh aspect, a chip is provided. The chip includes a processing circuit configured to perform the method according to any one of the possible implementations of the first aspect or the second aspect.

According to an eighth aspect, a computer program product is provided. The computer program product is tangibly stored in a computer-readable medium and includes computer-executable instructions. When the computer-executable instructions are executed, a device is caused to implement the method according to any one of the possible implementations of the first aspect or the second aspect.

According to the technical solutions of this application, when paging UE, a first network device and/or a second network device may determine SSBs on which the UE is to be paged (for example, the UE is to be paged only on an SSB included in first information), and do/does not need to page the UE on all SSBs, thereby reducing energy consumption during network paging.

The "SUMMARY" part is provided to introduce related concepts in a simplified form. These concepts are further described in the following specific implementations. The "SUMMARY" part is not intended to identify key features or main features of this application, and is not intended to limit the scope of embodiments of this application.

### BRIEF DESCRIPTION OF DRAWINGS

With reference to accompanying drawings and the following detailed descriptions, features, advantages, and other aspects of implementations of example solutions of this application become more apparent. Several implementations of the example solutions of this application are shown herein by way of example rather than limitation. In the accompanying drawings:
FIG. 1 is a diagram of a communication system in which example implementations of embodiments of this application can be implemented;
FIG. 2 is a signaling interaction diagram of a communication process according to example implementations of some embodiments of this application;
FIG. 3 is a diagram of a base station in a split architecture according to example implementations of some embodiments of this application;
FIG. 4 is a diagram of a communication process according to example implementations of some embodiments of this application;
FIG. 5 is a diagram of a communication process of an example implementation of CN paging according to some embodiments of this application;
FIG. 6A is a diagram of an SSB recommended for paging according to example implementations of some embodiments of this application;
FIG. 6B is a diagram of an example of first information according to example implementations of some embodiments of this application;
FIG. 6C is a diagram of another example of first information according to example implementations of some embodiments of this application;
FIG. 7 is a diagram of another communication process of an example implementation of CN paging according to some embodiments of this application;
FIG. 8 is a diagram of a communication process of an example implementation of RAN paging according to some embodiments of this application;
FIG. 9 is a diagram of another communication process of an example implementation of RAN paging according to some embodiments of this application;
FIG. 10 is a flowchart of a method implemented at a first network device according to some embodiments of this application;
FIG. 11 is a flowchart of a method implemented at a second network device according to some embodiments of this application;
FIG. 12 is a block diagram of a first network device according to some embodiments of this application;
FIG. 13 is a block diagram of a second network device according to some embodiments of this application; and
FIG. 14 is a simplified block diagram of an example device suitable for implementing embodiments of this application.

In the accompanying drawings, same or similar reference numerals indicate same or similar elements.

### DESCRIPTION OF EMBODIMENTS

The following describes embodiments of this application in more detail with reference to accompanying drawings. Although some embodiments of this application are shown in the accompanying drawings, it should be understood that this application may be implemented in various forms and should not be construed as being limited to embodiments described herein, and instead, these embodiments are provided for a more thorough and complete understanding of this application. It should be understood that, the accompanying drawings and embodiments of this application are merely used as examples, but are not used to limit the protection scope of this application.

In descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". In embodiments of this application, "first", "second", "third", and the like are used to distinguish between technical features in one type of technical feature, and there is no chronological order or no size order between the technical features described by "first", "second", and "third". The following may further include other explicit and implicit definitions.

Embodiments of this application may be implemented according to any appropriate communication protocol, including but not limited to a cellular communication protocol such as a 3rd generation (3rd Generation, 3G) communication protocol, a 4th generation (4G) communication protocol, a 5th generation (5G) communication protocol, and a future (for example, a 6th generation (6G)) communication protocol, a wireless local area network communication protocol such as the Institute of Electrical and Electronics Engineers (Institute of Electrical and Electronics Engineers, IEEE) 802.11, the 3rd Generation Partnership Project (3rd generation partnership project, 3GPP), and/or any other protocol currently known or developed in the future.

Technical solutions in embodiments of this application are applied to a communication system that complies with any appropriate communication protocol, for example, a general packet radio service (General Packet Radio Service, GPRS), a global system for mobile communications (Global System for Mobile Communications, GSM), an enhanced data rate for GSM evolution (Enhanced Data rate for GSM Evolution, EDGE) system, a universal mobile telecommunications system (Universal Mobile Telecommunications Service, UMTS), a long term evolution (Long Term Evolution, LTE) system, a wideband code division multiple access (Wideband Code Division Multiple Access, WCDMA) system, a code division multiple access 2000 (Code Division Multiple Access 2000, CDMA2000) system, a time division-synchronous code division multiple access (Time Division-Synchronous Code Division Multiple Access, TD-SCDMA) system, a frequency division duplex (Frequency Division Duplex, FDD) system, a time division duplex (Time Division Duplex, TDD) system, a 5th generation (5G) system (for example, a new radio (New Radio, NR) system), a future communication system (for example, a 6th generation (6G) system), and the like. The technical solutions provided in this application may be further applied to end-to-end (end to end, E2E) communication, device-to-device (device to device, D2D) communication, vehicle-to-everything (vehicle-to-everything, V2X) communication, machine-to-machine (machine to machine, M2M) communication, machine type communication (machine type communication, MTC), and an internet of things (internet of things, IoT) communication system or another communication system.

For a purpose of description, the following describes embodiments of this application by using a 5G communication system as a background. However, it should be understood that embodiments of this application are not limited to being applied to the communication system, but may be applied to any communication system having a similar problem, for example, a wireless local area network (WLAN), a wired communication system, or another communication system developed in the future.

The term "terminal device" used in this application is any terminal device that can perform wired or wireless communication with a network device or another terminal device. The terminal device may sometimes be referred to as user equipment (user equipment, UE), an application terminal, an access terminal, a subscriber unit, a subscriber station, a mobile station, a remote station, a remote terminal, a mobile device, a user terminal, a terminal, a wireless communication device, a user agent, or a user apparatus. Currently, the terminal device may be, for example, a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a wearable device, a terminal device in a 5G network or a terminal device in a future evolved public land mobile network (public land mobile network, PLMN), and the like. This is not limited in embodiments of this application. By way of example, and not limitation, in embodiments of this application, the terminal device may alternatively be a terminal device in an IoT system. An IoT is an important part of future information technology development, and a main technical feature of the IoT is to connect an object to a network by using a communication technology, to implement an intelligent network for human-machine interconnection and thing-thing interconnection. It may be understood that the terminal device in embodiments of this application may be a terminal that implements an application, for example, a terminal having a camera function, or a terminal that can perform data transmission. In embodiments of this application, an apparatus configured to implement a function of a terminal device may be a terminal device, or may be an apparatus that can support a terminal device in implementing the function, for example, a chip system or a chip. The apparatus may be installed in the terminal device. In embodiments of this application, the chip system may include a chip, or may include a chip and another discrete device.

The term "network device" used in this application is an entity or a node that may be configured to communicate with a terminal device, for example, may be an access network device. The access network device may be an apparatus that is deployed in a radio access network and that provides a wireless communication function for a mobile terminal, for example, may be a radio access network (Radio Access Network, RAN) network device. The access network device may include various types of base stations. The base station is configured to provide a radio access service for the terminal device. Specifically, each base station corresponds to a service coverage area, and a terminal device entering the area may communicate with the base station through a radio signal, to receive a radio access service provided by the base station. Service coverage areas of base stations may overlap, and a terminal device in an overlapping area may receive radio signals from a plurality of base stations. Therefore, the plurality of base stations may simultaneously provide services for the terminal device. Based on a size of the provided service coverage area, the access network device may include a macro base station providing a macro cell (Macro cell), a micro base station providing a micro cell (Pico cell), a pico base station providing a pico cell, and a femto base station providing a femto cell (Femto cell). In addition, the access network device may further include various forms of relay stations, access points, remote radio units (Remote Radio Unit, RRU), radio frequency heads (Radio Head, RH), remote radio heads (Remote Radio Head, RRH), and the like. In systems using different radio access technologies, the access network device may have different names. For example, the access network device is referred to as an evolved NodeB (evolved NodeB, eNB or eNodeB) in a long term evolution (Long Term Evolution, LTE) system network, is referred to as a NodeB (NodeB, NB) in a 3G network, and may be referred to as a gNodeB (gNB) or an NR NodeB (NR NB) in a 5G network. In some scenarios, the access network device may include a central unit (Central Unit, CU) and/or a distributed unit (Distributed Unit, DU). The CU and DU may be deployed in different places. For example, the DU is remotely deployed in a heavy-traffic area, and the CU is deployed in a central equipment room. Alternatively, the CU and the DU may be deployed in a same equipment room. The CU and the DU may alternatively be different components in a same rack. For ease of description, in the following embodiments of this application, the foregoing apparatuses that provide the wireless communication function for a mobile terminal are collectively referred to as network devices. This is not specifically limited in embodiments of this application.

When a network needs to transmit signaling or data to a terminal device in a radio resource control idle (RRC_IDLE) state and a terminal device in a radio resource control inactive (RRC_INACTIVE) state, the network usually first transmits a paging message to the terminal device, to trigger the terminal device to establish an RRC connection to a base station (BS), so as to enter a radio resource control connected (RRC_CONNECTED) state, and then the network transmits the signaling or the data transmission to the terminal device.

As described above, paging is classified into two types: core network (CN) paging, that is, paging initiated by a core network, is used to page the terminal device in the RRC idle state and the terminal device in the RRC inactive state; and radio access network (RAN) paging, that is, paging initiated by a radio access network, is used to page the terminal device in the RRC inactive state.

In CN paging, when an access and mobility management function (Access and Mobility Management Function, AMF) initiates paging to a terminal device (UE), the AMF transmits paging messages to several BSs. The message includes the following information: an identity of the UE, an identity of a cell that last serves the UE, an identity of a cell used for paging, and the like. The BS determines, based on the foregoing information, cells in which the UE is to be paged, and transmits paging messages to the UE in the selected cells. For example, the AMF may transmit paging messages to the following BSs: a BS that last serves the UE, a BS that is in a same tracking area (Tracking Area, TA) as the foregoing BS, and the like. In addition, one BS may have a plurality of cells. When paging the UE, the BS may transmit paging messages in all cells, or may transmit paging messages only in some cells. For example, the BS has six cells, but it is deduced, by using some methods (for example, based on information that is about "an identity of a cell used for paging" and that is transmitted by the AMF), that the UE is most likely to stay in two of the six cells. In this case, the BS may page the UE only in the two cells, and does not need to page the UE in all the six cells, thereby reducing a quantity of transmitted paging messages.

In RAN paging, when a specific BS initiates paging to UE, the specific BS transmits paging messages to several BSs (for example, another BS). The message may include the following information: an identity of the UE, an identity of a cell used for paging, and the like. The another BS determines, based on the foregoing information, cells in which the UE is to be paged, and transmits paging messages to the UE in the selected cells. At the same time, the specific BS may also select several cells, and transmit paging messages to the UE in the selected cells. For example, the specific BS may transmit paging messages to the following BSs: a BS in a same radio access network area (Radio Access Network Area, RAN Area) as the specific BS, and the like.

As described above, when paging the UE, the BS transmits paging messages to the UE in several cells. Generally, one cell includes a plurality of synchronization signal block (SSB) beams, and the SSB beam is also referred to as an SSB for short. When the BS transmits a paging message in a cell, the BS transmits a paging message on each SSB of the cell. To be specific, if one cell includes N SSBs (for example, N=4, 8, 16, 32, or 64), the BS needs to transmit N paging messages in the cell.

For example, when the UE is in a static or slowly moving state, a stay range of the UE may include only some SSBs, for example, an SSB that last serves the UE and an SSB adjacent to the foregoing SSB. In this case, the BS may page the UE only on the "some SSBs", and does not need to page the UE on all SSBs. In this manner, a quantity of paging messages transmitted by the BS can be reduced, thereby reducing network energy consumption.

Therefore, a feasible method is as follows: After the UE enters the RRC idle state or the RRC inactive state, the base station notifies the AMF of information about an SSB on which the UE may stay (and the AMF forwards the information to another base station), or notifies another base station the foregoing information. When a network initiates paging to the UE, the another base station may select, based on the foregoing information, an SSB used to page the UE, to avoid paging the UE on all SSBs. This reduces a quantity of transmitted paging messages, and reduces network energy consumption.

In view of this, an embodiment disclosed in this application provides a communication method. In the communication method, a base station BS (a serving base station of UE) transmits, to an AMF in a core network or another BS in an access network, information about an SSB recommended for paging. The information about the SSB used for paging may be associated with one piece of UE. Specifically, the information about the SSB used for paging may include a list, and the list includes information about one or more SSBs. Information about each SSB includes a cell identity (that is, an identity of a cell to which the SSB belongs) and an SSB index. In addition, the information about each SSB may further include stay time of the UE on the SSB. Alternatively or additionally, the information about the SSB used for paging includes a list, and the list includes information about one or more cells. Information about each cell includes a cell identity. In addition, the information about each cell may further include information about one or more SSBs (if the information about each cell does not include the information about the one or more SSBs, it indicates that an SSB in the cell is not specified). Information about each SSB includes an SSB index, or may further include indication information. The indication information may, for example, indicate that the SSB is a visited SSB or a non-visited SSB, or indicate stay time of the UE on the SSB. Then, in CN paging, an AMF transmits a paging message to a base station BS'. The message is associated with one piece of UE. The message includes the information about the SSB recommended for paging. Then, the base station BS' may page the UE based on the information about the SSB recommended for paging. In RAN paging, another BS in an access network may page the UE based on the information that is about the SSB recommended for paging and that is received from the BS. Here, the base station BS' or the another BS may be the BS itself, or may be different from the BS. In this manner, when a network releases a context of the UE, the BS notifies the AMF of information about an SSB that last serves the UE and/or information about an SSB on which the UE may stay, and the AMF forwards the information to the BS (including the BS itself and the another BS), or the BS notifies the another BS of information about an SSB that last serves the UE and/or information about an SSB on which the UE may stay. When paging the UE, the AMF and/or the BS (including the BS itself and the another BS) may determine, based on the foregoing information, SSBs on which the UE is to be paged (for example, the UE is to be paged only on an SSB included in the foregoing information), and do/does not need to page the UE on all SSBs, thereby reducing energy consumption during network paging.

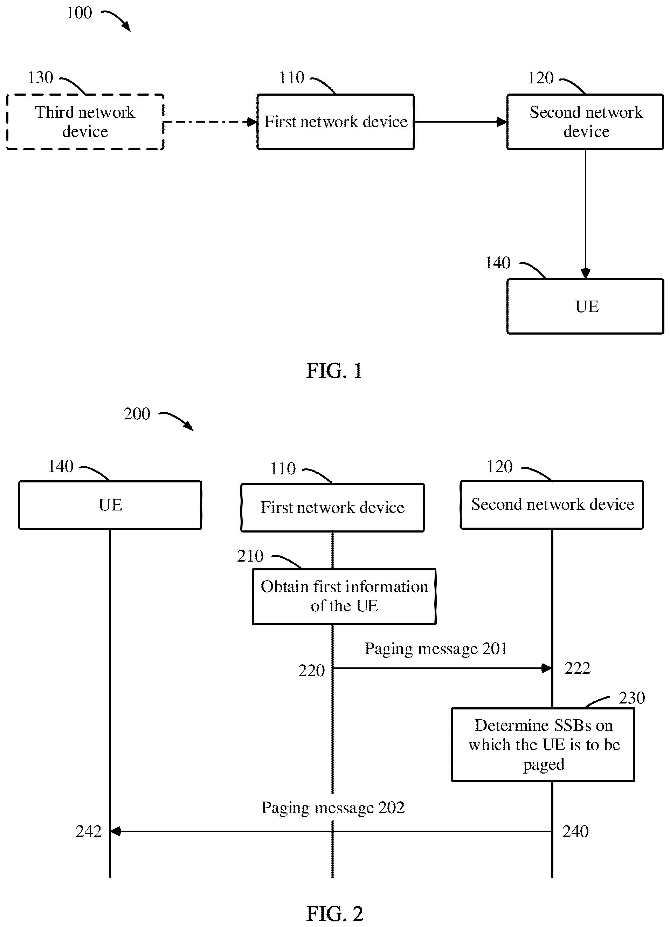

FIG. 1 is a diagram of a communication system 100 in which embodiments of this application may be implemented. As shown in FIG. 1, the communication system 100 is a part of a network, and includes a first network device 110, a second network device 120, and a terminal device 140. The first network device 110 may transmit a paging message to the second network device 120, and then the second network device 120 pages the terminal device 140 based on the paging message. For example, in a CN paging scenario, the first network device 110 may be an AMF in a core network. In a RAN paging scenario, the first network device 110 may be a network device (for example, a base station) in an access network. Specifically, the first network device 110 may be a base station in a non-split architecture, or may be a central unit (CU) of a base station in a split architecture. The second network device 120 may be a network device (for example, a base station) in an access network. Specifically, the second network device 120 may be a base station in a non-split architecture, or may be a central unit (CU) of a base station in a split architecture.

In some embodiments, the communication system 100 may further include a third network device 130. The third network device 130 may be, for example, a serving base station of the terminal device 140. Specifically, the third network device 130 may be a base station in a non-split architecture, or may be a central unit (CU) of a base station in a split architecture.

FIG. 2 is a signaling interaction diagram of a communication process 200 according to example implementations of some embodiments of this application. The communication process 200 relates to a first network device and a second network device. The first network device is, for example, the first network device 110 shown in FIG. 1, and the second network device is, for example, the second network device 120 shown in FIG. 1. The following describes the communication process 200 with reference to FIG. 1.

As shown in FIG. 2, in the communication process 200, in 210, the first network device 110 obtains first information of a terminal device 140. The first information indicates at least one synchronization signal block (SSB) used to page the terminal device 140. Then, in 220, the first network device 110 transmits (220), to the second network device 120, a paging message 201 (sometimes referred to as a "first paging message") used to page the terminal device 140. The paging message 201 includes the first information. On a side of the second network device 120, the second network device 120 receives (222) the paging message 201 from the first network device 110. In 230, the second network device 120 determines, based on the first information included in the paging message 201, at least one SSB used to transmit a paging message to the UE 140. Then, the second network device 120 transmits (260) a paging message 203 (the paging message 203 is sometimes referred to as a "second paging message" below) to the UE 140 on the at least one SSB determined in 250. On the other side of communication, the UE 140 receives (262) the paging message 203 from the second network device 120.

In some embodiments, the first information includes information about the at least one SSB, and information about an SSB in the at least one synchronization signal block (SSB) includes a cell identity that indicates a cell to which the SSB belongs, and an index of the SSB. In this manner, when paging the terminal device 140, the first network device 110 and/or the second network device 120 may determine, based on the first information, SSBs on which the terminal device 140 is to be paged (for example, the terminal device 140 is to be paged only on an SSB included in the first information), and do/does not need to page the terminal device 140 on all SSBs, thereby reducing energy consumption during network paging.

In some embodiments, the cell identity is a cell global identity (Cell Global Identity, CGI) of a cell to which the SSB belongs. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the SSB further includes second information, and the second information indicates that the SSB is an SSB last used by the terminal device 140 (that is, a last serving SSB of the terminal device 140), or the SSB is an SSB not last used by the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the SSB further includes information about stay time of the terminal device 140 on the SSB. For example, the time information may be an integer, indicating a corresponding quantity of seconds, a corresponding quantity of minutes, or the like. For another example, the time information may include, for example, a moment at which the terminal device 140 enters the SSB and a moment at which the terminal device 140 leaves the SSB. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the SSB further includes third information, and the third information indicates that the SSB is a visited (visited) synchronization signal block (SSB) for the terminal device 140, or the synchronization signal block (SSB) is a non-visited (non-visited) synchronization signal block (SSB) for the terminal device 140. Specifically, in some embodiments, SSBs that have been visited by the terminal device 140 may be arranged from last to first in a sequence in which the terminal device 140 visits the SSBs. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, a synchronization signal block (SSB) that has not been visited by the terminal device 140 is a synchronization signal block (SSB) adjacent to a synchronization signal block (SSB) that has been visited by the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, in the first information, synchronization signal blocks (SSBs) that have been visited by the terminal device 140 are arranged in a sequence in which the terminal device 140 visits the synchronization signal blocks (SSBs). In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

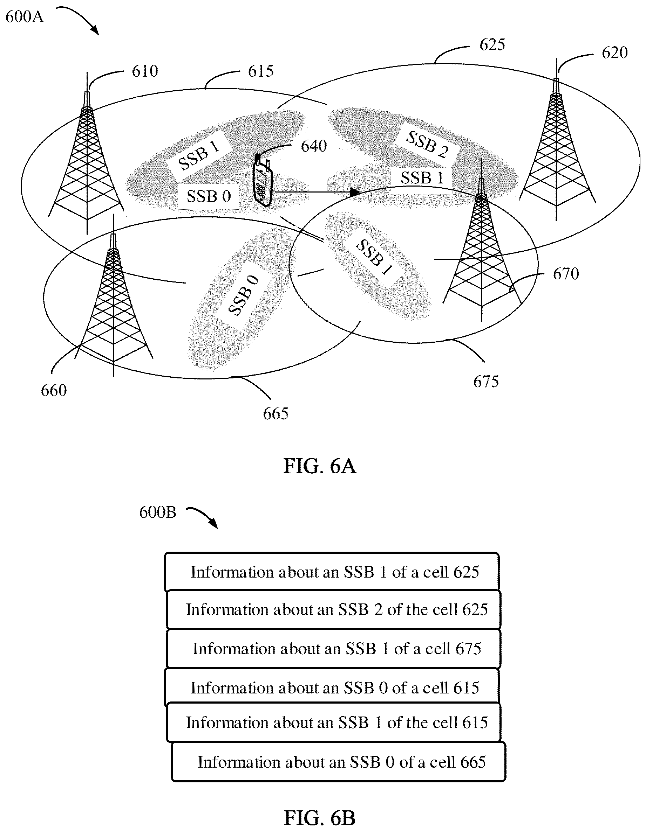

In some embodiments, in the first information, a synchronization signal block (SSB) that has not been visited by the terminal device 140 is after a synchronization signal block (SSB) that has been visited by the terminal device 140. Herein, the SSB that has not been visited by the terminal device 140 is associated with the SSB that has been visited by the terminal device 140. This will be described later with reference to FIG. 6A and FIG. 6B. For example, in some embodiments, the synchronization signal block (SSB) that has not been visited by the terminal device 140 is immediately after (immediately after) the synchronization signal block (SSB) that has been visited by the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the first information includes information about at least one cell, the information about the at least one cell includes information about the synchronization signal block (SSB) used to page the terminal device 140, the at least one cell includes a cell that has been visited by the terminal device 140, and information about a cell in the at least one cell includes a cell identity. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the at least one cell further includes a cell that has not been visited by the terminal device 140, and the cell that has not been visited by the terminal device 140 is a cell adjacent to a cell that has been visited by the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the cell further includes an index of the synchronization signal block (SSB). In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the cell further includes fourth information, and the fourth information indicates that the synchronization signal block (SSB) is a synchronization signal block (SSB) that has been visited by the terminal device 140, or the synchronization signal block (SSB) is a synchronization signal block (SSB) that has not been visited by the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the cell further includes the information about the stay time of the terminal device 140 on the synchronization signal block (SSB). For example, the time information may be an integer, indicating the corresponding quantity of seconds, the corresponding quantity of minutes, or the like. For another example, the time information may include, for example, the moment at which the terminal device 140 enters the SSB and the moment at which the terminal device 140 leaves the SSB. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, in the first information, cells that have been visited by the terminal device 140 are arranged in a sequence in which the terminal device 140 visits the cells. Specifically, the cells that have been visited by the terminal device 140 may be arranged from last to first in the sequence in which the terminal device 140 visits the cells. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

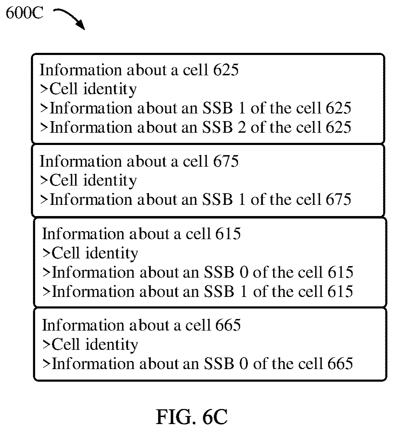

In some embodiments, in the first information, a cell that has not been visited by the terminal device 140 is after a cell that has been visited by the terminal device 140. Herein, the cell that has not been visited by the terminal device 140 is associated with the cell that has been visited by the terminal device 140. This is described later with reference to FIG. 6A and FIG. 6C. In some embodiments, the cell that has not been visited by the terminal device 140 is immediately after (immediately after) the cell that has been visited by the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the first network device 110 is an access and mobility management function (Access and Mobility Management Function, AMF) in a core network. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the communication method further includes: The first network device (namely, the AMF) receives, from the third network device 130, information including the first information, and the first network device 110 obtains the first information. In this manner, when a network releases a UE context corresponding to the terminal device 140, the third network device 130 notifies the first network device 110 of information about an SSB that last serves the terminal device 140 and/or information about an SSB on which the terminal device 140 may stay, and the first network device 110 forwards the information to the second network device 120 (the second network device 120 may be the third network device 130, or may not be the third network device 130). When paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information from the third network device 130 is carried in at least one of the following: a UE context release complete message, a UE context suspend request, a UE context resume request, or a message other than a UE context release complete message, a UE context suspend request, or a UE context resume request. In this manner, when the network releases the UE context corresponding to the terminal device 140, the third network device 130 notifies the first network device 110 (namely, the AMF) of the information about the SSB that last serves the terminal device 140 and/or the information about the SSB on which the UE may stay, and the first network device 110 forwards the information to the second network device 120 (the second network device 120 may be the third network device 130, or may not be the third network device 130). When paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, that the first network device 110 transmits the paging message 201 to the second network device 120 includes: The first network device 110 (namely, the AMF) parses the information from the third network device 130, and transmits the paging message 201 to the second network device 120; or the first network device 110 forwards the paging message 201 to the second network device 120 without parsing the information from the third network device 130. In this manner, when the network releases the UE context corresponding to the terminal device 140, the third network device 130 notifies the first network device 110 of the information about the SSB that last serves the terminal device 140 and/or the information about the SSB on which the terminal device 140 may stay, and the first network device 110 forwards the information to the second network device 120 (the second network device 120 may be the third network device 130, or may not be the third network device 130). When paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the third network device 130 is a network device that last serves the terminal device 140. In this manner, when the network releases the UE context corresponding to the terminal device, the third network device 130 notifies the first network device 110 (namely, the AMF) of the information about the SSB that last serves the terminal device 140 and/or the information about the SSB on which the terminal device 140 may stay, and the first network device 110 forwards the information to the second network device 120 (the second network device 120 may be the third network device 130, or may not be the third network device 130). When paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the second network device 120 is at least one of the following: the third network device 130, or a network device that is in a tracking area of the terminal device 140 and that is different from the third network device 130. In this manner, when the network releases the UE context corresponding to the terminal device 140, the third network device 130 notifies the first network device 110 (namely, the AMF) of the information about the SSB that last serves the terminal device 140 and/or the information about the SSB on which the terminal device 140 may stay, and the first network device 110 forwards the information to the second network device 120 (the second network device 120 may be the third network device 130, or may not be the third network device 130). When paging the terminal device 140, the first network device 110 and/or the second network device 120 may determine, based on the foregoing information, the SSBs on which the terminal device 140 is to be paged, and do/does not need to page the terminal device 140 on all the SSBs, thereby reducing energy consumption during network paging.

In some embodiments, the third network device 130 is one of the following: a base station in a non-split architecture or a central unit (Centralized Unit, CU) of a base station in a split architecture. In this manner, when the network releases the UE context corresponding to the terminal device 140, the third network device 130 notifies the first network device 110 (namely, the AMF) of the information about the SSB that last serves the terminal device 140 and/or the information about the SSB on which the terminal device 140 may stay, and the first network device 110 forwards the information to the second network device 120 (the second network device 120 may be the third network device 130, or may not be the third network device 130). When paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, when the third network device 130 is the central unit (CU) of the base station in the split architecture, the information from the third network device 130 is obtained by the third network device 130 from a distributed unit (Distributed Unit, DU) of the base station in the split architecture. In this manner, when the network releases the UE context corresponding to the terminal device 140, the third network device 130 notifies the first network device 110 (namely, the AMF) of the information about the SSB that last serves the terminal device 140 and/or the information about the SSB on which the terminal device 140 may stay, and the first network device 110 forwards the information to the second network device 120 (the second network device 120 may be the third network device 130, or may not be the third network device 130). When paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the first network device 110 is a network device in an access network, and obtaining the first information of the terminal device 140 includes: The first network device 110 locally determines the first information. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the first network device 110 is a central unit (CU) of a base station in a split architecture, and the communication method further includes: The first network device 110 receives information from a distributed unit DU of the base station in the split architecture, where the information from the distributed unit DU includes the first information, and that the first network device 110 obtains the first information includes: The first network device 110 obtains the first information based on the information from the distributed unit DU. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the second network device 120 and the first network device 110 are in a same radio access network area. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the second network device 120 is a base station in a non-split architecture, and the first information is transmitted by the second network device 120 to the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, a sequence of synchronization signal blocks (SSBs) in the first information indicates a sequence in which the second network device 120 pages the terminal device 140 on the synchronization signal blocks (SSBs). In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, that the at least one SSB used to transmit the paging message 202 to the UE 140 is determined in 230 includes: The second network device 120 selects, from the first information based on a cell identity of a cell associated with the second network device 120, the at least one SSB used to transmit the paging message 202 to the UE 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the first information includes information about the at least one determined SSB, and information about an SSB in the at least one determined synchronization signal block (SSB) includes: a cell identity that indicates a cell to which the SSB belongs, and an index of the SSB. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the cell identity is a cell global identity (CGI). In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the SSB further includes second information, and the second information indicates that the SSB is an SSB last used by the UE 140, or the SSB is an SSB not last used by the UE 140. In this manner, when paging the UE 140, the first network device 110 and/or the second network device 120 may determine, based on the first information, SSBs on which the UE 140 is to be paged, and do/does not need to page the UE 140 on all SSBs, thereby reducing energy consumption during network paging.

In some embodiments, the information about the SSB further includes information about stay time of the UE 140 on the SSB. For example, the time information may be an integer, indicating a corresponding quantity of seconds, a corresponding quantity of minutes, or the like. For another example, the time information may include, for example, a moment at which the UE 140 enters the SSB and a moment at which the UE 140 leaves the SSB. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the information about the SSB further includes third information, and the third information indicates that the SSB is a synchronization signal block (SSB) that has been visited by the UE 140, or the synchronization signal block (SSB) is a synchronization signal block (SSB) that has not been visited by the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, a synchronization signal block (SSB) that has not been visited by the UE 140 is a synchronization signal block (SSB) adjacent to a synchronization signal block (SSB) that has been visited by the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, in the first information, synchronization signal blocks (SSBs) that have been visited by the UE 140 are arranged in a sequence in which the UE 140 visits the synchronization signal blocks (SSBs). In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, in the first information, a synchronization signal block (SSB) that has not been visited by the UE 140 is after a synchronization signal block (SSB) that has been visited by the UE 140, and the synchronization signal block (SSB) that has not been visited by the UE 140 is associated with the synchronization signal block (SSB) that has been visited by the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the first information includes information about at least one cell, the information about the at least one cell includes information about the synchronization signal block (SSB) used to page the UE 140, the at least one cell includes a cell that has been visited by the UE 140, and information about a cell in the at least one cell includes a cell identity. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the at least one cell further includes a cell that has not been visited by the UE 140, and the cell that has not been visited by the UE 140 is a cell adjacent to a cell that has been visited by the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the information about the cell further includes an index of the synchronization signal block (SSB). In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the information about the cell further includes fourth information, and the fourth information indicates that the synchronization signal block (SSB) is a synchronization signal block (SSB) that has been visited by the UE 140, or the synchronization signal block (SSB) is a synchronization signal block (SSB) that has not been visited by the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the information about the cell further includes the information about the stay time of the UE 140 on the synchronization signal block (SSB). For example, the time information may be an integer, indicating the corresponding quantity of seconds, the corresponding quantity of minutes, or the like. For another example, the time information may include, for example, the moment at which the UE 140 enters the SSB and the moment at which the UE 140 leaves the SSB. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, in the first information, cells that have been visited by the UE 140 are arranged in a sequence in which the UE 140 visits the cells. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, in the first information, a cell that has not been visited by the UE 140 is after an associated cell that has been visited by the UE 140. Herein, the cell that has not been visited by the UE 140 is associated with the cell that has been visited by the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the first network device 110 is one of an access and mobility management function AMF in a core network, a base station in a non-split architecture, or a central unit (CU) of a base station in a split architecture. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the second network device 120 and the first network device 110 are in a same radio access network area. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the second network device 120 is a base station in a non-split architecture, and the second network device 120 transmits the paging message 203 to the UE 140. In this manner, when paging the terminal device 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the second network device 120 is a central unit (CU) of a base station in a split architecture, and the second network device 120 forwards the paging message 203 to a distributed unit DU of the base station in the split architecture, so that the distributed unit DU forwards the paging message 203 to the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, a sequence of synchronization signal blocks (SSBs) in the first information indicates a sequence in which the second network device 120 pages the UE 140 on the synchronization signal blocks (SSBs). In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

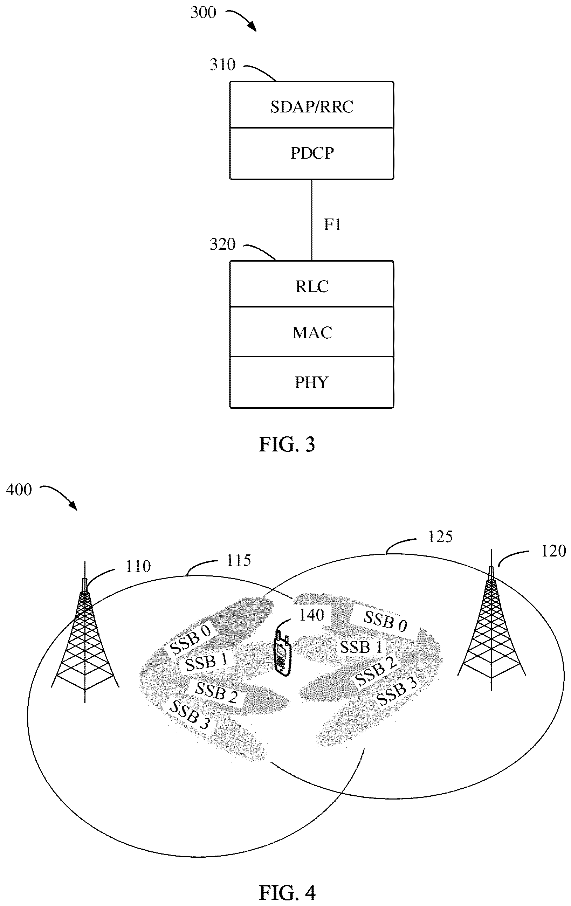

A base station usually has two architectures: a non-split architecture and a split architecture. In the non-split architecture, the base station is a complete unit, and has all functions of an air interface protocol stack. In the split architecture, the base station includes two parts: a central unit (Centralized Unit, CU) and a distributed unit (Distributed Unit, DU), and functions of an air interface protocol stack are allocated to the two parts. The following provides descriptions with reference to FIG. 3.

FIG. 3 is a diagram of a base station in a split architecture 300 according to some embodiments of this application. For example, the base station may be the second network device 120, the third network device 130, and the first network device 110 on an access network side shown in FIG. 1. As described above, in the split architecture, the base station includes two parts: a central unit (Centralized Unit, CU) and a distributed unit (Distributed Unit, DU), and functions of an air interface protocol stack are allocated to the two parts. Specifically, in FIG. 3, a central unit 310 of the base station undertakes functions of a service data adaptation protocol (Service Data Adaptation Protocol, SDAP) layer/radio resource control (Radio Resource Control, RRC) layer and a packet data convergence protocol (Packet Data Convergence Protocol, PDCP) layer. A distributed unit 320 of the base station undertakes functions of a radio link control (Radio Link Control, RLC) layer, a medium access control (Medium Access Control, MAC) layer, and a physical layer (Physical Layer, PHY). An interface between the central unit 310 and the distributed unit 320 is an F1 interface. In other words, the central unit 310 and the distributed unit 320 communicate with each other through the F1 interface. In the base station, there is only one central unit, and there may be a plurality of distributed units.

As described above, when paging UE, the BS transmits paging messages to the UE in several cells. Generally, one cell includes a plurality of synchronization signal block (SSB) beams, which are briefly referred to as SSB. When the BS transmits a paging message in a cell, the BS transmits a paging message on each SSB of the cell. That is, if one cell includes N SSBs (for example, N=4, 8, 16, or 32), the BS needs to transmit N paging messages in the cell. When the UE is in a static or slowly moving state, a stay range of the UE may include only some SSBs, for example, an SSB that last serves the UE and an SSB adjacent to the foregoing SSB. In this case, the BS may page the UE only on the "some SSBs", and does not need to page the UE on all SSBs. The following provides further descriptions with reference to FIG. 4.

FIG. 4 is a diagram of a communication process 400 according to example implementations of some embodiments of this application. The communication process 400 may be considered as an implementation of the communication process 200 described in FIG. 2, and the communication process 400 relates to a first network device, a second network device, and a terminal device. The first network device may be, for example, the first network device 110 shown in FIG. 1. The first network device 110 may be a base station, and has a cell 115. The second network device may be, for example, the second network device 120 shown in FIG. 1. The second network device 120 may be a base station, and has a cell 125. The cell 125 is a neighboring cell of the cell 115. The terminal device may be, for example, the terminal device (UE) 140 shown in FIG. 1. The following schematically describes the communication process 400 with reference to FIG. 1 and FIG. 2.

In the example shown in FIG. 4, the UE 140 moves slowly, and a possible stay range of the UE 140 includes an SSB that last serves the UE 140 (an SSB 1 of the cell 115) and SSBs adjacent to the SSB. Specifically, in the example shown in FIG. 4, an SSB 0 and an SSB 2 that are of the cell 115, and an SSB 1 of the cell 125 are adjacent to the SSB 1 of the cell 115. To page the UE, the BS needs to transmit paging messages only on these SSBs (that is, four SSBs: the SSB 1, the SSB 0, and the SSB 2 that are of the cell 115, and the SSB 1 of the cell 125), and does not need to transmit paging messages on all the SSBs of the cell 115 and the cell 125.

As described above, the first network device 110 and/or the second network device 120 page/pages the UE 140 only on the "some SSBs" without paging the UE 140 on all the SSBs, so that a quantity of paging messages transmitted by the BS can be reduced, thereby reducing network energy consumption.

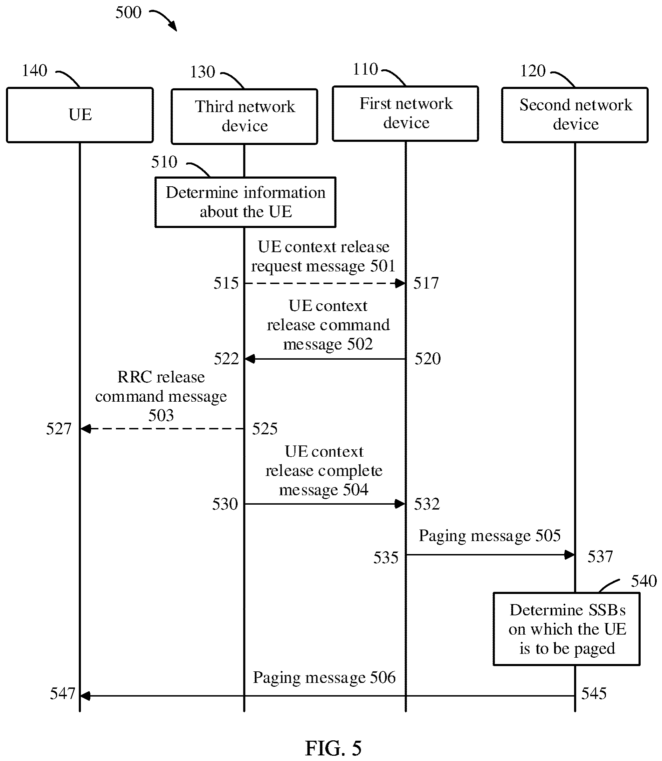

FIG. 5 is a diagram of a communication process 500 according to example implementations of some embodiments of this application. The communication process 500 may be considered as an implementation of the communication process 200 described in FIG. 2 for CN paging, and the communication process 500 relates to a first network device, a second network device, a third network device, and a terminal device (UE). The first network device may be, for example, the first network device 110 shown in FIG. 1, the second network device may be, for example, the second network device 120 shown in FIG. 1, the third network device may be, for example, the third network device 130 shown in FIG. 1, and the terminal device may be, for example, the terminal device (UE) 140 shown in FIG. 1. In the embodiment shown in FIG. 5, the first network device 110 is an access and mobility management function (Access and Mobility Management Function, AMF) in a core network, the second network device 120 is a base station in a non-split architecture, and the third network device 130 is a base station in a non-split architecture. The following schematically describes the communication process 500 with reference to FIG. 1, FIG. 2, and FIG. 4.

As shown in FIG. 5, in 510, the third network device 130 determines information about the terminal device (UE) 140. The information about the UE 140 may include information about a serving cell and information about a serving SSB. The serving cell is a cell that serves the UE 140, and the serving SSB is an SSB that serves the UE 140 in the serving cell. For example, in the example shown in FIG. 4, the UE 140 is currently located on the SSB 1 of the cell 115. Therefore, a serving cell of the UE 140 is the cell 115, and a serving SSB of the UE 140 is the SSB 1 of the cell 115.

The information about the serving cell may include a cell identity, and may further include cell signal quality and/or signal strength. The information about the serving SSB may include an SSB index, and may further include SSB signal quality and/or signal strength. The information about the UE 140 may further include information about an adjacent SSB. The adjacent SSB is an SSB whose coverage area overlaps or is adjacent to a coverage area of the serving SSB. For example, in the example shown in FIG. 4, coverage areas of the SSB 0 and the SSB 2 that are of the cell 115 overlap a coverage area of the SSB 1 (that is, the serving SSB of the UE 140) of the cell 115, and a coverage area of the SSB 1 of the cell 125 is adjacent to the coverage area of the SSB 1 of the cell 115. Therefore, the SSB 0 and the SSB 2 that are of the cell 115 and the SSB 1 of the cell 125 are all adjacent SSBs of the SSB 1 (that is, the serving SSB of the UE 140) of the cell 115. The adjacent SSB may be, for example, an SSB in the serving cell, or may be an SSB in a neighboring cell of the serving cell. For example, as an adjacent SSB of the SSB 1 of the cell 115 (that is, the serving SSB of the UE 140), the SSB 0 and the SSB 2 that are of the cell 115 are SSBs of the serving cell (that is, the cell 115), and the SSB 1 of the cell 125 is an SSB of a neighboring cell of the serving cell (that is, the cell 125). The information about the adjacent SSB may include an identity of a cell to which the SSB belongs and an SSB index. The information about the adjacent SSB may further include SSB signal quality and/or signal strength.

For example, the third network device 130 may determine "the information about the serving cell and the information about the serving SSB" by using the following method. In a process in which the UE 140 accesses a cell of the third network device 130, the third network device 130 may obtain the identity of the serving cell and the index of the serving SSB based on a signal and signaling that are transmitted by the UE 140. After accessing the serving cell that is of the third network device 130 and that is for the UE 140, the UE 140 measures signal quality and/or signal strength of the serving cell and the serving SSB, and reports the signal quality and/or the signal strength to the third network device 130, so that the third network device 130 can obtain the signal quality and/or the signal strength of the serving cell and the serving SSB of the third network device 130 for the UE 140.

In addition, for example, the third network device 130 may determine "the information about the adjacent SSB" by using the following method. For example, the UE 140 may measure signal quality and/or signal strength of all SSBs in the serving cell and a neighboring cell of the serving cell of the third network device 130 for the UE 140, and report a measurement result to the third network device 130. Then, the third network device 130 uses a non-serving SSB whose signal quality and/or signal strength are/is greater than a preset threshold as an adjacent SSB of the terminal device 140. For another example, a network management system (sometimes referred to as a "network management system") may obtain, through analysis based on network planning information and network measured data, an adjacent SSB corresponding to each SSB, and configure the information for the third network device 130, so that the third network device 130 can derive an adjacent SSB of the UE 140 based on the information about the serving SSB and the configured information.

Optionally, the third network device 130 may transmit (515) a UE context release request (UE CONTEXT RELEASE REQUEST) message 501 to the first network device 110. The UE context release request message 501 includes an identity of the UE 140. The UE context release request message 501 is used to request the first network device 110 to release a logical NG (Next Generation) connection related to the UE 140. On the other side of communication, the first network device 110 receives (517) the UE context release request message 501 from the third network device 130.

The first network device 110 then transmits (520) a UE context release command (UE CONTEXT RELEASE COMMAND) message 502 to the third network device 130 in response to receiving (517) the UE context release request message 501 from the third network device 130. The UE context release command message 502 includes the identity of the UE 140, and the identity of the UE 140 is extracted from the UE context release request message 501. The UE context release command message 502 is used to request the third network device 130 to release the logical NG connection related to the UE 140. On the other side of communication, the third network device 130 receives (522) the UE context release command message 502 from the first network device 110.

Then, optionally, the third network device 130 transmits (525) a radio resource control release (Radio Resource Control (RRC) Release) message 503 to the UE 140. The RRC release message 503 is used to command the UE 140 to release (release) or suspend (suspend) an RRC connection between the UE 140 and the third network device 130. On the other side of communication, the UE 140 receives (527) the RRC release message 503 from the third network device 130.

The third network device 130 transmits (530) a UE context release complete (UE CONTEXT RELEASE COMPLETE) message 504 to the first network device 110. The UE context release complete message 504 includes information 1, and further includes information 2 and/or information 3. On the other side of communication, the first network device 110 receives (532) the UE context release complete message 504 from the third network device 130.

The information 1 includes the identity of the UE 140. As described above, the identity of the UE 140 may be, for example, extracted from the UE context release request message 501. The identity may be a radio access network user equipment NG application protocol identity (Radio Access Network User Equipment NG Application Protocol Identity, RAN UE NGAP ID) and/or an access and mobility management function user equipment NG application protocol identity (Access and Mobility Management Function User Equipment NG Application Protocol Identity, AMF UE NGAP ID).

The information 2 includes location information of the UE 140, and specifically includes a cell identity and an SSB index. The cell identity is an identity of a serving cell of the terminal device 140 (or a cell on which the terminal device 140 camps). The identity may be a cell global identity (Cell Global Identity, CGI). The SSB index is an index of a serving SSB of the UE 140 (or an SSB on which the UE 140 camps). For example, the index may be an integer, and a value of the index ranges from 0 to 63, indicating an SSB 0, an SSB 1, an SSB 2, ..., and an SSB 63.

The information 2 carries information about an SSB that last serves the UE 140. When paging the UE 140, the first network device 110 and/or the second network device 120 may determine, based on the information 2, SSBs on which the UE 140 is to be paged (for example, the UE 140 is to be paged only on the SSB that last serves the UE 140), and do/does not need to page the UE 140 on all SSBs, thereby reducing energy consumption during network paging.

The information 3 is used to recommend an SSB used for paging. In an implementation, the information 3 includes a list, and the list includes information about one or more SSBs. Information about each of the one or more SSBs may include a cell identity (that is, an identity of a cell to which an SSB belongs) and an SSB index (namely, an index of the SSB). For example, the cell identity may be a cell global identity (CGI), and the SSB index may be an integer ranging from 0 to 63, indicating an SSB 0, an SSB 1, an SSB 2, ..., and an SSB 63. Additionally and/or optionally, the information about each SSB may further include information about stay time of the UE 140 on the SSB. For example, the time information may be an integer, indicating a corresponding quantity of seconds, a corresponding quantity of minutes, or the like. For another example, the time information may include a moment at which the UE 140 enters the SSB and a moment at which the UE 140 leaves the SSB. Additionally and/or optionally, the information about each SSB may further include a coverage status of the SSB. For example, a value of the coverage status is an integer, and ranges from 0 to 63. Each value represents a set of coverage configuration parameters of the SSB. The parameters may be specified in a standard, or may be delivered by the network management system to a base station.

As described above, the information 3 carries information about an SSB on which the UE 140 may stay. Therefore, when paging the terminal device 140, the first network device 110 and/or the second network device 120 may determine, based on the information 3, the SSBs on which the UE 140 is to be paged (for example, the UE 140 is to be paged only on an SSB included in the information 3), and do/does not need to page the UE 140 on all the SSBs, thereby reducing energy consumption during network paging.

The SSB included in the information 3 includes a visited (visited) SSB for the UE 140, or may further include a non-visited (non-visited) SSB for the UE 140. The visited SSB is an SSB that has served the UE 140, and the non-visited SSB is an SSB that has not served the UE 140. Information about a non-visited SSB does not include "stay time of the UE on the SSB", or a value of the "stay time of the UE on the non-visited SSB" is 0.

If the information 3 includes a plurality of SSBs, a corresponding plurality of pieces of "information about the SSBs" are arranged in the list according to the following rule: For visited SSBs, the pieces of "information about the SSBs" are sequentially arranged in the list from last to first in a visit sequence. That is, "information about an SSB" corresponding to a later visited SSB ranks higher in the list. "Information about an SSB" corresponding to a non-visited SSB is immediately after an associated visited SSB in the list. The "associated SSB" herein is an adjacent SSB, that is, an SSB whose coverage area overlaps or is adjacent to a coverage area of the SSB. The associated SSB and the SSB may belong to a same cell, or may belong to different cells. If a visited SSB has a plurality of associated non-visited SSBs, mutual locations of these non-visited SSBs in the list are not limited. For this example of the information 3, refer to FIG. 6B.

For the information 3, in another implementation, the information 3 includes a list, and the list includes information about one or more cells. A cell in the list may include a cell that has been visited by the terminal device 140, or may further include a cell that has not been visited by the terminal device 140. If the list includes a plurality of cells, a corresponding plurality of pieces of "information about the cells" are arranged in the list according to the following rule: for visited cells, the pieces of "information about the cells" are sequentially arranged in the list from last to first in a visit sequence. That is, "information about a cell" corresponding to a later visited cell ranks higher in the list. "Information about a cell" corresponding to a non-visited cell is immediately after an associated visited cell in the list. The "associated cell" herein is a neighboring cell. If a visited cell has a plurality of associated non-visited cells, mutual locations of these non-visited cells in the list are not limited. For this example of the information 3, refer to FIG. 6C.

The information about the cell may include a cell identity. The cell identity may be a cell global identity (CGI). The information about the cell may further include information about one or more SSBs (if the information about the cell does not include information about an SSB, it indicates that an SSB in the cell is not specified). Information about each SSB may include an SSB index, that is, an index of the SSB. For example, the index is an integer, and a value of the index ranges from 0 to 63, indicating an SSB 0, an SSB 1, an SSB 2, ..., and an SSB 63. The information about each SSB may further include indication information, and the indication information may, for example, indicate that the SSB is a visited SSB, or indicate that the SSB is a non-visited SSB. Alternatively or additionally, the information about each SSB may further include information about stay time of the UE 140 on the SSB. For example, the time information may be an integer, indicating a corresponding quantity of seconds or minutes. For another example, the time information may include a moment at which the UE 140 enters the SSB and a moment at which the UE 140 leaves the SSB.

An SSB included in "information about a cell" corresponding to a visited cell may include an SSB that has been visited by the UE 140 in the cell, or may further include an SSB that has not been visited by the UE 140 in the cell. "Information about an SSB" corresponding to a non-visited SSB does not include "stay time of the UE on the SSB", or a value of "stay time of the UE on the non-visited SSB" is 0.

The foregoing is described by using an example in which the information 3 is transmitted to the second network device 120 in the UE context release complete message 504. Alternatively or additionally, the information 3 may be transmitted to the second network device 120 in a UE context suspend request. Alternatively or additionally, the information 3 may be transmitted to the second network device 120 in a UE context resume request. Alternatively or additionally, the information 3 may be transmitted to the second network device 120 in a message other than a UE context release complete message, a UE context suspend request, or a UE context resume request. For example, a message may be customized and used to transmit the information 3 to the second network device 120.

The information 3 may be transparent to the first network device 110 (that is, the first network device 110 does not parse the information 3, but forwards the information 3 to another node, for example, the second network device 120, in a subsequent step). Alternatively, the information 3 may not be transparent to the first network device 110 (that is, the first network device 110 parses the information 3, and then transmits the information 3 to the second network device 120 based on a parsing result).

Additionally and/or optionally, the UE context release complete message 504 may further include information 4. The information 4 is used to recommend a cell used for paging. The information 4 may include a list, and the list includes information about one or more cells. Information about each cell may include a cell identity. The cell identity may be a cell global identity (CGI). Additionally and/or optionally, the information about each cell may further include a cell coverage status, that is, a coverage status of the cell. For example, a value of the coverage status is an integer, and ranges from 0 to 63. Each value represents a set of coverage configuration parameters of the cell. The parameters may be specified in a standard, or may be delivered by the network management system to a base station.

When the first network device 110 needs to page the UE 140 (for example, when signaling or data needs to be transmitted to the UE 140), the first network device 110 transmits (535) a paging message 505 to the second network device 120. On the other side of communication, the second network device 120 receives (537) the paging message 505 from the first network device 110.

The second network device 120 that receives the paging message 505 may be the third network device 130 that last serves the UE 140, or may be another network device that is in a tracking area (Tracking Area, TA) of the UE 140 and that is different from the third network device 130. The paging message 505 may include the identity of the UE 140. The identity may be a UE paging identity (UE Paging Identity). The paging message 505 may further include information about an SSB recommended for paging. The information about the SSB recommended for paging may be the same as content of the "SSB recommended for paging" (namely, the information 3) included in the UE context release complete message 504. Additionally and/or optionally, the paging message 505 may further include information about a cell recommended for paging. The information about the cell recommended for paging may be the same as content of the "cell recommended for paging" (namely, the information 4) included in the UE context release complete message 504.

The first network device 110 may determine, by using various methods, second network devices 120 to which paging messages 505 are to be transmitted. This is not limited herein. For example, the first network device 110 may transmit paging messages 505 to all network devices in a tracking area (TA) in which the UE 140 is located.

Then, the second network device 120 determines (540), based on the received information about the SSB recommended for paging, SSBs on which the UE 140 is to be paged. For example, if the "SSB recommended for paging" includes a cell and/or an SSB that belong/belongs to the second network device 120, the second network device 120 may determine to transmit a paging message 506 to the UE 140 on the SSB. Then, the second network device 120 transmits (545) the paging message 506 to the UE 140 on the determined SSB. On the other side of communication, the UE 140 receives (547) the paging message 506 from the second network device 120.

Additionally and/or optionally, the third network device 130 may further transmit a first message to the first network device 110. The first message is defined as including information about a cell that has been recently visited by the UE 140 (that is, a recent serving cell) and/or information about an SSB that has been recently visited by the UE 140 (that is, a recent serving SSB). On the other side of communication, the first network device 110 receives the first message from the third network device 130.

The information about the cell that has been recently visited by the UE may include a list, and the list includes information about one or more cells. Information about each cell may include a cell identity, and the identity may be a cell global identity (CGI). Optionally, the information about each cell may further include information about stay time of the UE (for example, the UE 140 shown in FIG. 1) in the cell. For example, a time value is an integer, indicating a corresponding quantity of seconds, a corresponding quantity of minutes, or the like. For another example, the time information may include a moment at which the UE 140 enters the cell and a moment at which the UE 140 leaves the cell. Optionally, the information about each cell may further include a cell coverage status, that is, a coverage status of the cell. For example, a value of the coverage status may be an integer, and ranges from 0 to 63 (or may be any proper value range such as 0 to 15 or 0 to 31). Each value represents a set of coverage configuration parameters of the cell. The parameters may be specified in a standard, or may be delivered by the network management system to a base station.

The information about the SSB that has been recently visited by the UE may include a list, and the list includes information about one or more SSBs. Information about each SSB may include a cell identity, that is, an identity of a cell to which the SSB belongs. The cell identity may be a cell global identity (CGI). The information about each SSB may further include an SSB index, that is, an index of the SSB. For example, the index may be an integer, and a value of the index ranges from 0 to 63, indicating an SSB 0, an SSB 1, an SSB 2, ..., and an SSB 63. Optionally, the information about each SSB may further include information about stay time of the UE (for example, the UE 140 shown in FIG. 1) on the SSB. For example, the time value is an integer, indicating a corresponding quantity of seconds, a corresponding quantity of minutes, or the like. For another example, the time information may include a moment at which the UE 140 enters the SSB and a moment at which the UE 140 leaves the SSB. Optionally, the information about each SSB may further include an SSB coverage status, that is, a coverage status of the SSB. For example, a value of the coverage status may be an integer, and ranges from 0 to 63 (or may be any proper value range such as 0 to 15 or 0 to 31). Each value represents a set of coverage configuration parameters of the SSB. The parameters may be specified in a standard, or may be delivered by the network management system to a base station.

After the first network device 110 receives the first message from the third network device 130, the first network device 110 may transmit a second message to the second network device 120. The second message may be transparent or not transparent to the first network device 110. Specifically, the first network device 110 may parse the first message from the third network device 130, to obtain, through parsing, the information about the cell that has been recently visited by the UE 140 and/or the information about the SSB that has been recently visited by the UE 140, then generate the second message based on the information about the cell that has been recently visited by the UE 140 and/or the information about the SSB that has been recently visited by the UE 140, and transmit the second message to the second network device 120. Alternatively, the first network device 110 may not parse the first message from the third network device 130, but forward the first message to the second network device 120 as the second message. On the other side of communication, the second network device 120 receives the second message from the first network device 110. The second network device 120 may generate the "cell recommended for paging" and/or the "SSB recommended for paging" based on the information that is about the cell that has been recently visited by the UE 140 and that is included in the received second message and/or the information that is about the SSB that has been recently visited by the UE 140 and that is included in the received second message.

According to the embodiment shown in FIG. 5, when releasing a UE context of the UE 140, the third network device 130 serving the UE 140 notifies (or recommends) the first network device 110 of information about an SSB that last serves the UE 140 and/or information about an SSB on which the UE 140 may stay, and the first network device 110 forwards the information to the second network device 120. The second network device 120 may be the third network device 130, or may be another network device that is in the tracking area of the UE 140 and that is different from the third network device 130. When paging the UE 140, the first network device 110 and/or the second network device 120 may determine, based on the information about the recommended SSB, SSBs on which the UE 140 is to be paged (for example, the UE 140 is to be paged only on an SSB included in the information about the recommended SSB), and do/does not need to page the UE 140 on all SSBs, thereby reducing energy consumption during network paging.

FIG. 6A is a diagram 600A of SSBs used for paging according to some embodiments of this application. The following describes FIG. 6A with reference to FIG. 1, FIG. 2, and FIG. 5. The embodiment shown in FIG. 6A shows four network devices 610, 620, 630, 660, and 670. The network devices are, for example, network devices that are the same as or similar to the second network device 120 and the third network device 130 shown in FIG. 1. These network devices 610, 620, 630, 660, and 670 have cells 615, 625, 665, and 675, respectively. The cell 665 is a neighboring cell of the cell 615, and the cell 675 is a neighboring cell of the cell 625. The embodiment in FIG. 6A further shows a terminal device (UE) 640. The UE 640 is, for example, a terminal device that is the same as or similar to the UE 140 shown in FIG. 1. The following schematically describes FIG. 6A with reference to FIG. 1 and FIG. 4.

As shown in FIG. 6A, the UE 640 sequentially visits an SSB 0 of the cell 615 and an SSB 1 of the cell 625. Therefore, the cell 615 and the cell 625 are serving cells of the terminal device, and the cell 625 is a cell later visited by the UE 640 than the cell 615A. In addition, the SSB 0 of the cell 615 and the SSB 1 of the cell 625 are serving BBSs of the UE 640, and the SSB 1 of the cell 625 is an SSB later visited by the UE 640 than the SSB 0 of the cell 615. In addition, the SSB 0 of the cell 615 has the following adjacent/associated non-visited SSBs: an SSB 1 of the cell 615 and an SSB0 of the cell 675 (the neighboring cell of the cell 615). The SSB 1 of the cell 625 has the following adjacent/associated non-visited SSBs: an SSB 2 of the cell 625 and an SSB 1 of the cell 675 (the neighboring cell of the cell 625).

FIG. 6B is a diagram 600B of information 3 according to some embodiments of this application. The following describes FIG. 6B with reference to FIG. 1 and FIG. 6A.

As described above, if the information 3 includes a plurality of SSBs, a corresponding plurality of pieces of "information about the SSBs" are arranged in a list according to the following rule: For visited SSBs, the pieces of "information about the SSBs" are sequentially arranged in the list from last to first in a visit sequence. That is, "information about an SSB" corresponding to a later visited SSB ranks higher in the list. "Information about an SSB" corresponding to a non-visited SSB is immediately after an associated visited SSB in the list. The "associated SSB" is an adjacent SSB, that is, an SSB whose coverage area overlaps or is adjacent to a coverage area of the SSB. The associated SSB and the SSB may belong to a same cell, or may belong to different cells. If a visited SSB has a plurality of associated non-visited SSBs, mutual locations of these non-visited SSBs in the list are not limited.

Specifically, for the embodiment shown in FIG. 6A, the list included in the information 3 includes six items in total, as shown in FIG. 6B: information about the SSB 1 of the cell 625, information about the SSB 2 of the cell 625, information about the SSB 1 of the cell 675, information about the SSB 0 of the cell 615, information about the SSB 1 of the cell 615, and information about the SSB 0 of the cell 665. An item 1 (that is, the information about the SSB 1 of the cell 625) and an item 4 (the information about the SSB 0 of the cell 615) are information about SSBs that have been visited by the UE 640, and are sequentially arranged from last to first in a visit sequence. Items 2, 3, 5, and 6 are information about SSBs that have not been visited by the UE 640, and are immediately after associated visited SSBs in the list shown in FIG. 6B. For example, as described above, the SSB 1 of the cell 625 has the following adjacent/associated non-visited SSBs: the SSB 2 of the cell 625 and the SSB 1 of the cell 675 (the neighboring cell of the cell 625). Therefore, in the list shown in FIG. 6B, the SSB 2 of the cell 625 and the SSB 1 of the cell 675 are immediately after the associated visited SSB (that is, the item 1: the "information about the SSB 1 of the cell 625"), and are listed as the item 2 and the item 3 respectively. In addition, as described above, the SSB 0 of the cell 615 has the following adjacent/associated non-visited SSBs: the SSB 1 of the cell 615 and the SSB 0 of the cell 675 (the neighboring cell of the cell 615). Therefore, in the list shown in FIG. 6B, the SSB 1 of the cell 615 and the SSB 0 of the cell 675 are immediately after the associated visited SSB (that is, the item 4: the "information about the SSB 0 of the cell 615"), and are listed as the item 5 and the item 6 respectively.

FIG. 6C is another diagram 600C of information 3 according to some embodiments of this application. The following describes FIG. 6C with reference to FIG. 1 and FIG. 6A.

As described above, the information 3 includes a list, and the list includes information about at least one cell. A cell in the list may include a cell that has been visited by the UE 140, or may further include a cell that has not been visited by the UE 140. If the list includes a plurality of cells, a corresponding plurality of pieces of "information about the cells" are arranged in the list according to the following rule: for cells that have been visited by the UE 640, the pieces of "information about the cells" are sequentially arranged in the list from last to first in a visit sequence. That is, "information about a cell" corresponding to a later visited cell ranks higher in the list. "Information about a cell" corresponding to a non-visited cell is immediately after an associated visited cell in the list. The "associated cell" is a neighboring cell. If a visited cell has a plurality of associated non-visited cells, mutual locations of these non-visited cells in the list are not limited.

Specifically, for the embodiment shown in FIG. 6A, the list included in the information 3 includes four items, as shown in FIG. 6C. An item 1 and an item 3 are information about cells that have been visited by the UE 640, and an item 2 and an item 4 are information about cells that have not been visited by the UE 640. When the list shown in FIG. 6C is created, as described above, information about cells that have been visited by the UE 640 (which are sequentially the cell 615 and the cell 625) is sequentially arranged in the list from last to first in a visit sequence, that is, in the list in FIG. 6C, information about the cell 625 is arranged before information about the cell 615. The information about the cell 625 may include a cell identity and information about one or more SSBs specified in the cell 625. For example, for the cell 625, as shown in FIG. 6A, the SSB 1 and the SSB 2 are specified. The SSB 1 is a serving SSB, and the SSB 2 is an SSB adjacent to the serving SSB in the cell 625. Therefore, the information about the one or more SSBs specified in the cell 625 may be further arranged in a sequence of the serving SSB and the adjacent SSB. To be specific, as shown in FIG. 6C, in the information 3, "information about the SSB 1 of the cell 625" is arranged before "information about the SSB 2 of the cell 625". The information about the cell 615 may be created in the same manner, that is, may include a cell identity and information about one or more SSBs specified in the cell 615. For the cell 615, as shown in FIG. 6A, the SSB 0 and the SSB 1 are specified. The SSB 0 is a serving SSB, and the SSB 1 is an SSB adjacent to the serving SSB in the cell 615. Therefore, the information about the one or more SSBs specified in the cell 615 may be further arranged in a sequence of the serving SSB and the adjacent SSB. To be specific, as shown in FIG. 6C, in the information 3, "information about the SSB 0 of the cell 615" is arranged before "information about the SSB 1 of the cell 615".

"Information about a cell" corresponding to a cell that has not been visited by the UE 640 is immediately after an associated visited cell in the list. Because the cell 675 is the neighboring cell of the cell 625, information about the cell 675 that has not been visited by the UE 640 is recorded in the item 2 after the information about the visited cell 625 in the item 1. The information about the cell 675 may include a cell identity and information about the SSB 1 specified in the cell 675. Furthermore, because the cell 665 is the neighboring cell of the cell 615, information about the cell 665 that has not been visited by the UE 640 is recorded in the item 4 after the information about the visited cell 615 in the item 3. The information about the cell 665 may include a cell identity and information about the SSB 0 specified in the cell 665.

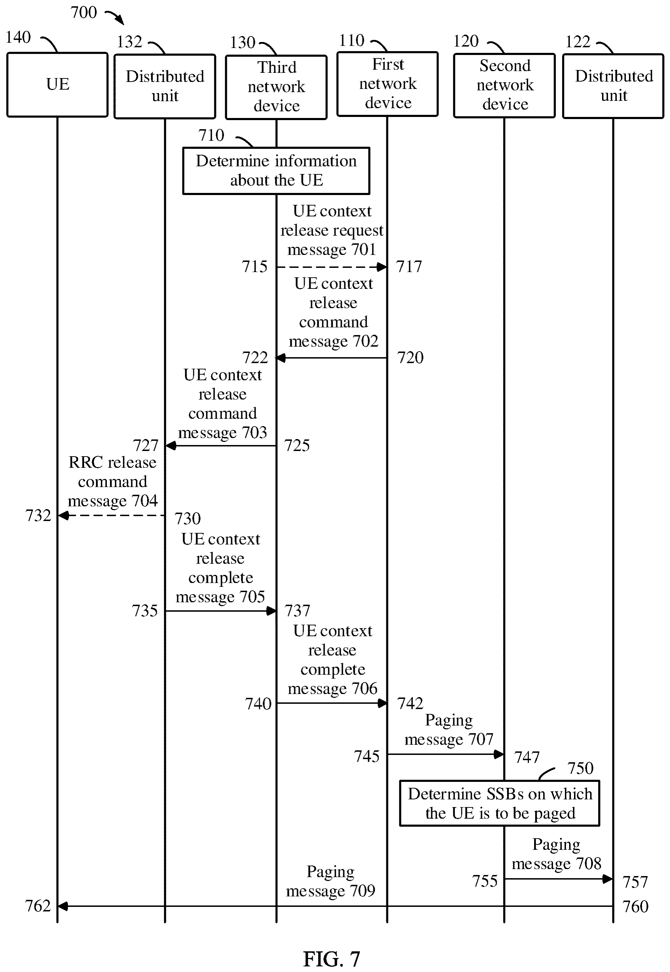

FIG. 7 is a diagram of a communication process 700 according to example implementations of some embodiments of this application. The communication process 700 may be considered as an implementation of the communication process 200 shown in FIG. 2 for CN paging, and the communication process 700 relates to a first network device, a second network device, a third network device, and a terminal device. The first network device may be, for example, the first network device 110 shown in FIG. 1, and may be, for example, an AMF in a core network. The second network device may be, for example, the second network device 120 shown in FIG. 1, and may be, for example, a central unit (Centralized Unit, CU) in a base station in a split architecture. The third network device may be, for example, the third network device 130 shown in FIG. 1, and may be, for example, a central unit (Centralized Unit, CU) in a base station in a split architecture. The terminal device may be, for example, the terminal device (UE) 140 shown in FIG. 1. With reference to FIG. 1, FIG. 2, FIG. 4, and FIG. 5, the following schematically describes the communication process 700 by using differences between the communication process 700 and the communication process 500 shown in FIG. 5.

The differences between the communication process 700 and the communication process 500 shown in FIG. 5 lie in that the second network device 120 and the third network device 130 each are a central unit (CU) in a base station in a CU/DU split architecture, and a step of communication between the CU and the DU of the base station is added.

In 710, the third network device 130 determines information about the UE 140. Processing in 710 is the same as processing in 510 in the embodiment shown in FIG. 5. For specific descriptions, refer to descriptions of 510 in the embodiment shown in FIG. 5.

Then, optionally, the third network device 130 transmits (715) a UE context release request 701 to the first network device 110. On the other side of communication, the first network device 110 receives (717) the UE context release request 701 from the third network device 130. The UE context release request 701 is equivalent to the UE context release request 501 in the embodiment shown in FIG. 5, and processing related to the UE context release request 701 is similar to processing related to the UE context release request 501 in the embodiment shown in FIG. 5. For specific descriptions, refer to descriptions of processing related to the UE context release request 501 in the embodiment shown in FIG. 5.

In response to receiving (717) the UE context release request 701 from the third network device 130, the first network device 110 transmits (720) a UE context release command 702 to the third network device 130. On the other side of communication, the third network device 130 receives (722) the UE context release command 702 from the first network device 110. The UE context release command 702 is equivalent to the UE context release command 502 in the embodiment shown in FIG. 5, and processing related to the UE context release command 702 is similar to processing related to the UE context release command 502 in the embodiment shown in FIG. 5. For specific descriptions, refer to descriptions of processing related to the UE context release command 502 in the embodiment shown in FIG. 5.

In response to receiving (722) the UE context release command 702 from the first network device 110, the third network device 130 transmits (725) a UE context release command (UE CONTEXT RELEASE COMMAND) message 703 to a distributed unit 132 of a base station to which the third network device 130 belongs. On the other side of communication, the distributed unit 132 receives (727) the UE context release command message 703 from the third network device 130. The UE context release command message 703 includes an identity of the UE 140. The UE context release command message 703 is used to request the distributed unit 132 to release a logical F1 connection related to the UE 140. For an F1 interface, refer to FIG. 3 and corresponding descriptions.

Optionally, in response to receiving (727) the UE context release command message 703 from the third network device 130, the distributed unit 132 transmits (730) an RRC release command 704 to the UE 140. On the other side of communication, the UE 140 receives the RRC release command 704 from the distributed unit 132. The RRC release command 704 is equivalent to the UE context release command 503 in the embodiment shown in FIG. 5, and processing related to the RRC release command 704 is similar to processing related to the RRC release command 503 in the embodiment shown in FIG. 5. For specific descriptions, refer to descriptions of processing related to the RRC release command 503 in the embodiment shown in FIG. 5.

The distributed unit 132 transmits a UE context release complete (UE CONTEXT RELEASE COMPLETE) message 705 to the third network device 130. The UE context release complete message 705 includes information 1', and further includes information 2' and/or information 3'. The UE context release complete message 705 can be used to help the third network device 130 determine information to be transmitted to the first network device 110 in a subsequent step (a UE context release complete message 706 in this figure).

Specifically, the information 1' includes the identity of the UE 140. As described above, the identity of the UE 140 may be, for example, extracted from the UE context release request message 701. The identity may be a radio access network user equipment NG application protocol identity (Radio Access Network User Equipment NG Application Protocol Identity, RAN UE NGAP ID) and/or an access and mobility management function user equipment NG application protocol identity (Access and Mobility Management Function User Equipment NG Application Protocol Identity, AMF UE NGAP ID).

The information 2' is information about an SSB that last serves the UE (sometimes referred to as a "serving SSB" in this specification). The information 2' includes an SSB index, namely, an index of the serving SSB. For example, the index is an integer, and a value of the index ranges from 0 to 63, indicating an SSB 0, an SSB 1, an SSB 2, ..., and an SSB 63. In addition, the information 2' may further include a cell identity, that is, an identity of a cell to which the SSB belongs (that is, a cell that last serves the UE, and sometimes referred to as a "serving cell" in this specification). The identity may be a cell global identity (CGI). In addition, the information 2' may further include information about stay time of the UE 140 on the SSB. For example, the time value is an integer, indicating a corresponding quantity of seconds, a corresponding quantity of minutes, or the like. For another example, the time information may include a moment at which the UE 140 enters the SSB and a moment at which the UE 140 leaves the SSB. In addition, the information 2' may further include information about an SSB adjacent to the SSB. The information about the adjacent SSB includes an SSB index, that is, an index of the adjacent SSB. For example, the index is an integer, and a value of the index ranges from 0 to 63, indicating an SSB 0, an SSB 1, an SSB 2, ..., and an SSB 63. In addition, the information about the adjacent SSB may further include a cell identity, that is, an identity of a cell to which the adjacent SSB belongs. The identity may be a cell global identity (CGI). If the cell identity is not included, it indicates that the adjacent SSB and the SSB that last serves the UE belong to a same cell.

The information 3' indicates an SSB recommended for paging, and is similar to the information 3 in the UE context release complete message 504 in the embodiment shown in FIG. 5. For the information 3', refer to descriptions of the information 3 in the UE context release complete message 504 in the embodiment shown in FIG. 5. Details are not described herein again.

As described above, the UE context release complete message 705 includes the information 2' and/or the information 3', and is transmitted (735) from the distributed unit 132 to the third network device 130. Additionally or alternatively, the information 2' and/or the information 3' may be transmitted to the first network device 110 in a UE context suspend request. Additionally or alternatively, the information 2' and/or the information 3' may be transmitted from the distributed unit 132 to the third network device 130 in a UE context resume request. Additionally or alternatively, the information 2' and/or the information 3' may be transmitted from the distributed unit 132 to the third network device 130 in a message other than a UE context release complete message, a UE context suspend request, or a UE context resume request. For example, a message may be customized and used to transmit the information 2' and/or the information 3' to the third network device 130.

Functions of the information 2' and the information 3' are similar to those of the information 2 and the information 3 in the embodiment shown in FIG. 5, and the information 2' and the information 3' are used to help the third network device 130 determine the UE context release complete message 706 to be transmitted to the first network device 110. The UE context release complete message 706 is similar to the UE context release complete message 504 in the embodiment shown in FIG. 5. For example, the information 2' may be used to generate "information 2" and/or "information 3" in the UE context release complete message 706, and the information 3' may be used to generate the "information 3" in the UE context release complete message 706.

Then, the third network device 130 transmits (740) the UE context release complete message 706 to the first network device 110. On the other side of communication, the first network device 110 receives (742) the UE context release complete message 706 from the third network device 130. As described above, the UE context release complete message 706 is similar to the UE context release complete message 504 in the embodiment shown in FIG. 5. For descriptions of the UE context release complete message 706, refer to descriptions of the UE context release complete message 504 in the embodiment shown in FIG. 5. Details are not described herein again. As described above, the UE context release complete message 706 includes the information 2 and/or the information 3. Additionally or alternatively, the information 2 and/or the information 3 may be transmitted to the first network device 110 in a UE context suspend request. Additionally or alternatively, the information 2 and/or the information 3 may be transmitted to the first network device 110 in a UE context resume request. Additionally or alternatively, the information 2 and/or the information 3 may be transmitted to the first network device 110 in a message other than a UE context release complete message, a UE context suspend request, or a UE context resume request. For example, a message may be customized and used to transmit the information 3' to the first network device 110.

Then, the first network device 110 transmits (745) a paging message 707 to the second network device 120. On the other side of communication, the second network device 120 receives (747) the paging message 707 from the first network device 110. The paging message 707 is similar to the paging message 505 in the embodiment shown in FIG. 5. For descriptions of the paging message 707, refer to descriptions of the paging message 505 in the embodiment shown in FIG. 5. Details are not described herein again.

In response to receiving (747) the paging message 707 from the first network device 110, the second network device 120 determines (750) SSBs on which the terminal device 140 is to be paged. Then, the second network device 120 transmits (755) a paging message 708 to a distributed unit 122 of a base station to which the second network device 120 belongs. The paging message 708 includes information that is in the information 3 and that is about an SSB recommended by the base station to which the second network device 120 belongs. On the other side of communication, the distributed unit 122 receives (757) the paging message 708 from the second network device 120. The paging message 708 includes a user identity. The identity may be a radio access network user equipment paging identity (Radio Access Network User Equipment Paging Identity, RAN UE Paging Identity), or may be a core network user equipment paging identity (Core Network User Equipment Paging Identity, CN UE Paging Identity). The paging message 708 further includes information about an SSB used for paging. The information about the SSB used for paging includes a cell identity, that is, an identity of a cell to which the SSB belongs. The identity may be a cell global identity (CGI). The information about the SSB used for paging may further include an SSB index, that is, an index of the SSB. For example, the index is an integer, and a value of the index ranges from 0 to 63, indicating an SSB 0, an SSB 1, an SSB 2, ..., and an SSB 63. Optionally (optionally), the information about the SSB used for paging may further include indication information that indicates whether the SSB is an SSB last used by the UE (that is, a last serving SSB). For example, the indication information may be of an enumeration type. When a value of the indication information is "true" (true), it indicates that the SSB is the SSB last used by the UE. When the SSB used for paging is not the SSB last used by the UE, the indication information may not exist in the paging message 708. Information included in the paging message 708 can be used to help the distributed unit 122 determine on which SSBs the UE 140 is to be paged. For example, the second network device 120 may select, from the received paging message 707, SSBs associated with cells of the base station to which the second network device 120 belongs, determine to page the UE 140 on these SSBs, separately include these SSBs in the paging information 708, and transmit the paging information 708 to corresponding distributed units 122.

For the distributed unit of the base station to which the second network device 120 belongs, only one distributed unit 122 is shown in FIG. 7. However, a person skilled in the art understands that the base station to which the second network device 120 belongs may have a plurality of distributed units. For example, the second network device 120 may select, from the received paging message 707, SSBs associated with cells of the base station to which the second network device 120 belongs, determine to page the UE 140 on these SSBs, separately include these SSBs in the paging information 708, and transmit the paging information 708 to corresponding distributed units 122. Specifically, the base station to which the second network device 120 belongs may have a plurality of distributed units (for example, denoted as a first distributed unit, a second distributed unit, ..., and a M^{th} distributed unit), and the M distributed units are separately associated with one cell. Therefore, the second network device 120 may select SSBs associated with M cells of the base station to which the second network device 120 belongs, separately include, in the paging information 708, an SSB associated with each of the M cells, and transmit the paging information 708 to corresponding distributed units.

Then, the distributed unit 122 transmits (760) a paging message 709 to the terminal device 140 on the recommended SSB based on the information that is about the recommended SSB and that is included in the paging message 708. On the other side of communication, the terminal device 140 receives (762) the paging message 709 from the distributed unit 122. The paging message 709 is similar to the paging message 506 in the embodiment shown in FIG. 5. For descriptions of the paging message 709, refer to descriptions of the paging message 506 in the embodiment shown in FIG. 5. Details are not described herein again.

According to the communication process 700 shown in FIG. 7, when paging the UE 140, the first network device 110 and/or the second network device 120 may determine, based on the information about the recommended SSB, SSBs on which the UE 140 is to be paged (for example, the UE 140 is to be paged only on an SSB included in the information about the recommended SSB), and do/does not need to page the UE 140 on all SSBs, thereby reducing energy consumption during network paging.

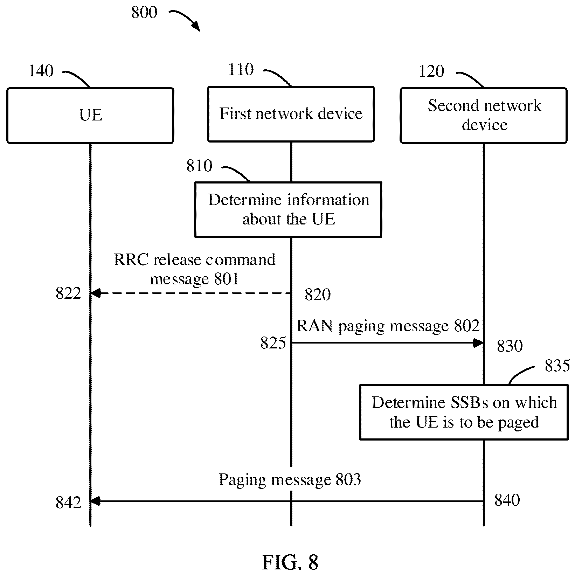

FIG. 8 is a diagram of a communication process 800 according to example implementations of some embodiments of this application. The communication process 800 may be considered as an implementation of the communication process 200 described in FIG. 2 for RAN paging, and the communication process 800 relates to a first network device, a second network device, and a terminal device. The first network device may be, for example, the first network device 110 shown in FIG. 1, and may be, for example, a base station in a non-split architecture. The second network device may be, for example, the second network device 120 shown in FIG. 1, and may be, for example, a base station in a non-split architecture. The terminal device may be, for example, the terminal device (UE) 140 shown in FIG. 1. The following schematically describes the communication process 800 with reference to FIG. 1, FIG. 2, FIG. 4, and FIG. 5.

In 810, the first network device 110 determines information about the terminal device (UE) 140. The operation is similar to the operation in 510 in the embodiment shown in FIG. 5, and a difference lies only in that 810 is executed by the first network device 110, and 510 in FIG. 5 is executed by the third network device 130. Therefore, details are not described herein again.

Then, optionally, the first network device 110 transmits (820) a radio resource control release (Radio Resource Control (RRC) Release) message 801 to the UE 140. The radio resource control release message 801 includes RRC connection suspend (suspend) configuration information. The radio resource control release message 801 is used to command the UE to suspend an RRC connection, so that the UE enters an RRC inactive (inactive) state. On the other side of communication, the terminal device 140 receives (822) the radio resource control release message 801 from the first network device 110. The operation is similar to the operation in which the third network device 130 transmits the radio resource control release message 503 to the terminal device 140 in the embodiment shown in FIG. 5. Therefore, details are not described herein again.

Then, when the first network device 110 needs to page the UE 140 (for example, when signaling or data needs to be transmitted to the UE 140), the first network device 110 transmits (825) a radio access network paging (Radio Access Network Paging, RAN Paging) message 802 to one or more second network devices 120. On the other side of communication, the second network device 120 receives (827) the RAN paging message 802 from the first network device 110. The RAN paging message 802 includes an identity of the UE 140. The identity may be a radio access network paging identity (UE RAN Paging Identity) of the UE 140. The RAN paging message 802 may further include information about an SSB recommended for paging. The information about the SSB recommended for paging is similar to the "information about the SSB recommended for paging" included in the UE context release complete message 504 in the embodiment in FIG. 5. It should be noted that, for brevity, only one second network device 120 is shown in FIG. 8. A person skilled in the art understands that there may be a plurality of second network devices 120 to which the first network device 110 transmits radio access network paging (RAN Paging) messages 802, and a quantity of second network devices 120 is not limited. For example, the second network device 120 may be one of a plurality of base stations in a same radio access network area (Radio Access Network Area, RAN Area) as the first network device 110.

The second network device 120 determines (835) SSBs on which paging messages are to be transmitted to the UE 140 based on the information that is included in the received RAN paging message 802 and that is about the SSB recommended for paging. For example, if the "SSB recommended for paging" includes a cell and an SSB that belong to the second network device 120, the second network device 120 may determine to transmit the paging message to the UE 140 on the SSB. Then, the second network device 120 transmits (840) a paging message 803 to the UE 140 on the determined SSB. On the other side of communication, the UE 140 receives (842) the paging message 803 from the second network device 120.

Additionally and/or optionally, the first network device 110 may further transmit a third message to the second network device 120. The third message is defined as including information about a cell that has been recently visited by the UE 140 (that is, a recent serving cell) and/or information about an SSB that has been recently visited by the UE 140 (that is, a recent serving SSB). On the other side of communication, the second network device 120 receives the third message from the first network device 110. For a definition of the third message, refer to descriptions of the first message in the communication process 500 described in FIG. 5.

Specifically, as described above, the information that is about the cell that has been recently visited by the UE and that is included in the third message may include a list, and the list includes information about one or more cells. Information about each cell may include a cell identity, and the identity may be a cell global identity (CGI). Optionally, the information about each cell may further include information about stay time of the UE (for example, the UE 140 shown in FIG. 1) in the cell. For example, the time value is an integer, indicating a corresponding quantity of seconds, a corresponding quantity of minutes, or the like. For another example, the time information may include a moment at which the UE 140 enters the cell and a moment at which the UE 140 leaves the cell. Optionally, the information about each cell may further include a cell coverage status, that is, a coverage status of the cell. For example, a value of the coverage status may be an integer, and ranges from 0 to 63 (or may be any proper value range such as 0 to 15 or 0 to 31). Each value represents a set of coverage configuration parameters of the cell. The parameters may be specified in a standard, or may be delivered by a network management system to a base station.

The information about the SSB that has been recently visited by the UE may include a list, and the list includes information about one or more SSBs. Information about each SSB may include a cell identity, that is, an identity of a cell to which the SSB belongs. The cell identity may be a cell global identity (CGI). The information about each SSB may further include an SSB index, that is, an index of the SSB. For example, the index may be an integer, and a value of the index ranges from 0 to 63 (or may be any proper value range such as 0 to 15 or 0 to 31), indicating an SSB 0, an SSB 1, an SSB 2, ..., and an SSB 63. Optionally, the information about each SSB may further include information about stay time of the UE (for example, the UE 140 shown in FIG. 1) on the SSB. For example, the time value is an integer, indicating a corresponding quantity of seconds, a corresponding quantity of minutes, or the like. For another example, the time information may include a moment at which the UE 140 enters the SSB and a moment at which the UE 140 leaves the SSB. Optionally, the information about each SSB may further include an SSB coverage status, that is, a coverage status of the SSB. For example, a value of the coverage status may be an integer, and ranges from 0 to 63 (or may be any proper value range such as 0 to 15 or 0 to 31). Each value represents a set of coverage configuration parameters of the SSB. The parameters may be specified in a standard, or may be delivered by a network management system to a base station.

After the second network device 120 receives the third message from the first network device 110, the second network device 120 may generate a "cell recommended for paging" and/or an "SSB recommended for paging" based on the information that is about the cell that has been recently visited by the UE 140 and that is included in the received third message and/or the information that is about the SSB that has been recently visited by the UE 140 and that is included in the received third message.

According to the communication process 800 shown in FIG. 8, the first network device 110 notifies another network device (for example, the second network device 120) of information about an SSB that last serves the UE 140 and/or information about an SSB on which the UE 140 may stay, so that the another network device may determine SSBs on which the UE 140 is to be paged (for example, the UE 140 is to be paged only on an SSB included in the foregoing information), and does not need to page the UE 140 on all SSBs, thereby reducing paging energy consumption.

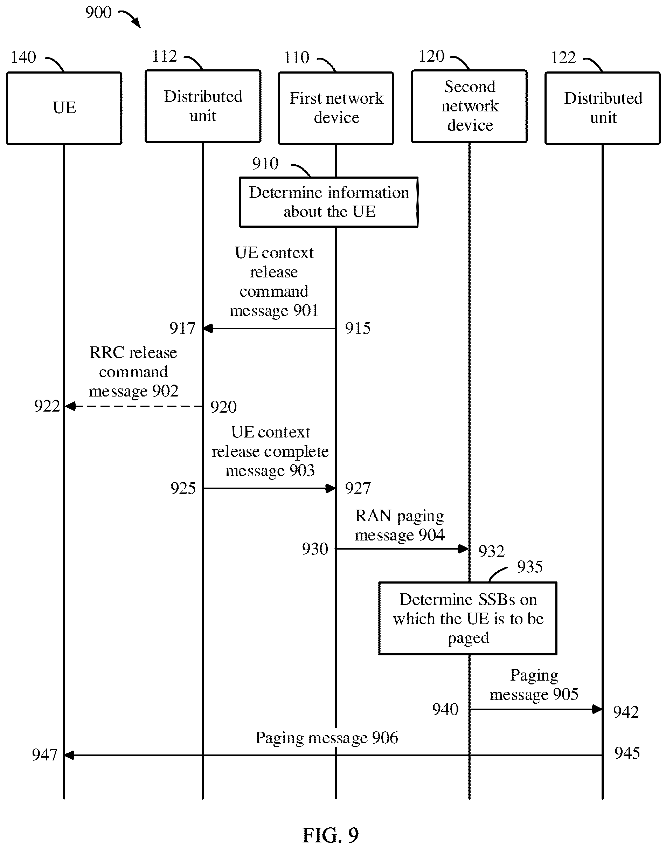

FIG. 9 is a diagram of a communication process 900 according to some embodiments of this application. The communication process 900 may be considered as another implementation of the communication process 200 described in FIG. 2, and the communication process 900 relates to a first network device, a second network device, and a terminal device. The first network device may be, for example, the first network device 110 shown in FIG. 1, the second network device may be, for example, the second network device 120 shown in FIG. 1, and the terminal device may be, for example, the terminal device (UE) 140 shown in FIG. 1. In the embodiment shown in FIG. 9, the first network device 110 and the second network device 120 each are a central unit (Centralized Unit, CU) in a base station in a split architecture. A difference between the communication process 900 and the communication process 800 shown in FIG. 8 lies in that a base station in the communication process 900 uses a CU/DU split architecture. Therefore, a step of communication between a CU and a DU of each base station is added. With reference to FIG. 1, FIG. 2, FIG. 3, and FIG. 8, the following schematically describes the communication process 900 by using the difference between the communication process 900 and the communication process 800 shown in FIG. 8.

In 910, the first network device 110 determines information about the UE 140. The operation is similar to that in 810 in FIG. 8, and a difference lies only in that 810 is executed by a base station in a non-split architecture (the first network device 110), and 910 in FIG. 9 is executed by the first network device 110 serving as a central unit (CU) in a base station in a split architecture.

The first network device 110 transmits (915) a UE context release command message 901 to a distributed unit 112 of a base station to which the first network device 110 belongs. On the other side of communication, the distributed unit 112 receives (917) the UE context release command message 901 from the first network device 110. The UE context release command message 901 includes an identity of the UE 140. The operation is similar to that in the embodiment shown in FIG. 7 in which the third network device 130 transmits (725) the UE context release command message 703 to the UE 140. For specific descriptions, refer to descriptions of the embodiment in FIG. 7. Details are not described herein again.

Optionally, in response to receiving (917) the UE context release command message 901 from the first network device 110, the distributed unit 112 transmits (920) an RRC release command 902 to the UE 140. On the other side of communication, the UE 140 receives (922) the RRC release command 902 from the distributed unit 112. The RRC release command 902 is equivalent to the RRC release command 704 in the embodiment shown in FIG. 7, and processing related to the RRC release command 902 is similar to processing related to the RRC release command 704 in the embodiment shown in FIG. 7. For specific descriptions, refer to descriptions of the embodiment shown in FIG. 7. Details are not described herein again.

The distributed unit 112 transmits (925) a UE context release complete (UE CONTEXT RELEASE COMPLETE) message 903 to the first network device 110. The UE context release complete message 903 is similar to the UE context release complete message 705 in the embodiment shown in FIG. 7. For specific descriptions, refer to descriptions of the embodiment shown in FIG. 7. Details are not described herein again.

Then, when the first network device 110 needs to page the UE 140 (for example, when signaling or data needs to be transmitted to the UE 140), the first network device 110 transmits (930) a radio access network paging (Radio Access Network Paging, RAN Paging) message 904 to the second network device 120. On the other side of communication, the second network device 120 receives (932) the RAN paging message 904 from the first network device 110. The RAN paging message 904 is similar to the RAN paging message 802 shown in FIG. 8. It should be noted that, for brevity, only one second network device 120 is shown in FIG. 9. A person skilled in the art understands that the first network device 110 may transmit radio access network paging (RAN Paging) messages 802 to a plurality of base stations, and a quantity of base stations is not limited. In addition, in a base station in a split architecture, there may be one or more distributed units DUs. In other words, a second network device 120 may correspond to a plurality of distributed units 122. For brevity, only one distributed unit 122 is shown herein, but a quantity of distributed units 122 is not limited to one.

The second network device 120 determines (935) SSBs on which paging messages are to be transmitted to the UE 140 based on information that is included in the received RAN paging message 904 and that is about an SSB recommended for paging. For example, if the "SSB recommended for paging" includes a cell and an SSB that belong to a base station to which the second network device 120 belongs, the second network device 120 may determine to transmit the paging message to the terminal device 140 on the SSB.

Then, the second network device 120 transmits (940) a paging message 905 to a distributed unit 122 of the base station to which the second network device 120 belongs. On the other side of communication, the distributed unit 122 receives (942) the paging message 905 from the second network device 120. The paging message 905 is similar to the paging message 708 in the embodiment shown in FIG. 7. For descriptions of the paging message 905, refer to descriptions of the paging message 708 in the embodiment shown in FIG. 7. Details are not described herein again.

Then, the distributed unit 122 transmits (945) a paging message 906 to the UE 140 on the recommended SSB based on the information that is about the recommended SSB and that is included in the paging message 905. On the other side of communication, the terminal device 140 receives (947) the paging message 906 from the distributed unit 122. The paging message 906 is similar to the paging message 803 in the embodiment shown in FIG. 8. For descriptions of the paging message 905, refer to descriptions of the paging message 803 in the embodiment shown in FIG. 8. Details are not described herein again.

According to the communication process 900 shown in FIG. 9, the first network device 110 may determine, based on information included in the UE context release complete message 903, information that is about an SSB recommended for paging the UE 140 and that is to be subsequently transmitted to another base station (for example, the base station to which the second network device 120 belongs). The distributed unit 122 may determine, based on information that is included in the paging message 905 and that is about the SSB recommended for paging the UE 140, SSBs on which the UE 140 is to be paged (for example, the UE 140 is to be paged only on an SSB included in the foregoing information), and does not need to page the UE 140 on all SSBs, thereby reducing power consumption of paging.

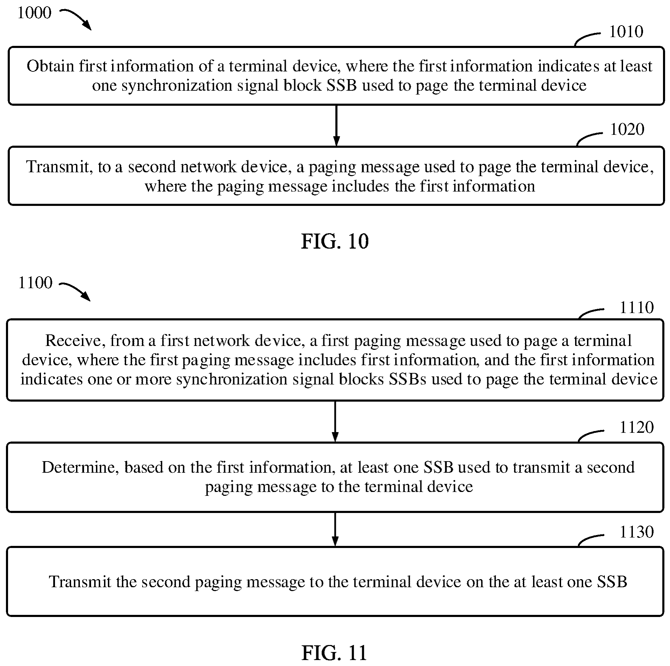

FIG. 10 is a flowchart of a method 1000 implemented at a first network device according to some embodiments of this application. In a possible implementation, the method 1000 may be implemented by a first network device 110 that is in a communication system 100 and that is located in a core network, the method 1000 may be implemented by a first network device (for example, a base station) 110 that is in a communication system 100 and that is in a non-split architecture on a RAN side, or the method 1000 may be implemented by a first network device 110 serving as a central unit of a base station in a split architecture. In another possible implementation, the method 1000 may alternatively be implemented by another electronic apparatus independent of the communication system 100. In an example, the following describes the method 1000 by using an example in which the method 1000 is implemented by the first network device 110 that is in the communication system 100 and that is located in the core network, the first network device 110 that is in the communication system 100 and that is in the non-split architecture on the RAN side, or the first network device 110 serving as the central unit of the base station in the split architecture.

In 1010, the first network device 110 obtains first information of a terminal device (for example, the UE 140 shown in FIG. 1), where the first information indicates at least one synchronization signal block SSB used to page the terminal device. In 1020, the first network device 110 transmits, to a second network device (for example, the second network device 120 shown in FIG. 1), a paging message used to page the terminal device, where the paging message includes the first information. In this manner, when paging the terminal device 140, the first network device 110 and/or the second network device 120 may determine, based on the first information, SSBs on which the terminal device 140 is to be paged (for example, the terminal device 140 is to be paged only on the SSB included in the first information), and do/does not need to page the terminal device 140 on all SSBs, thereby reducing energy consumption during network paging.

In some embodiments, the first information includes information about the at least one SSB, and information about an SSB in the at least one synchronization signal block (SSB) includes a cell identity that indicates a cell to which the SSB belongs, and an index of the SSB. In this manner, when paging the terminal device 140, the first network device 110 and/or the second network device 120 may determine, based on the first information, the SSBs on which the terminal device 140 is to be paged (for example, the terminal device 140 is to be paged only on the SSB included in the first information), and do/does not need to page the terminal device 140 on all the SSBs, thereby reducing energy consumption during network paging.

In some embodiments, the cell identity is a cell global identity (Cell Global Identity, CGI) of a cell to which the SSB belongs. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the SSB further includes second information, and the second information indicates that the SSB is an SSB last used by the terminal device 140 (that is, a last serving SSB of the terminal device 140), or the SSB is an SSB not last used by the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the SSB further includes information about stay time of the terminal device 140 on the SSB. The time information may include, for example, a moment at which the terminal device 140 enters the SSB and a moment at which the terminal device 140 leaves the SSB. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the SSB further includes third information, and the third information indicates that the SSB is a visited (visited) synchronization signal block (SSB) for the terminal device 140, or the synchronization signal block (SSB) is a non-visited (non-visited) synchronization signal block (SSB) for the terminal device 140. Specifically, in some embodiments, SSBs that have been visited by the terminal device 140 may be arranged from last to first in a sequence in which the terminal device 140 visits the SSBs. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, a synchronization signal block (SSB) that has not been visited by the terminal device 140 is a synchronization signal block (SSB) adjacent to a synchronization signal block (SSB) that has been visited by the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, in the first information, synchronization signal blocks (SSBs) that have been visited by the terminal device 140 are arranged in a sequence in which the terminal device 140 visits the synchronization signal blocks (SSBs). In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, in the first information, a synchronization signal block (SSB) that has not been visited by the terminal device 140 is after a synchronization signal block (SSB) that has been visited by the terminal device 140. Herein, the SSB that has not been visited by the terminal device 140 is associated with the SSB that has been visited by the terminal device 140. For example, in some embodiments, the synchronization signal block (SSB) that has not been visited by the terminal device 140 is immediately after (immediately after) the synchronization signal block (SSB) that has been visited by the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the first information includes information about at least one cell, the information about the at least one cell includes information about the synchronization signal block (SSB) used to page the terminal device 140, the at least one cell includes a cell that has been visited by the terminal device 140, and information about a cell in the at least one cell includes a cell identity. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the at least one cell further includes a cell that has not been visited by the terminal device 140, and the cell that has not been visited by the terminal device 140 is a cell adjacent to a cell that has been visited by the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the cell further includes an index of the synchronization signal block (SSB). In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the cell further includes fourth information, and the fourth information indicates that the synchronization signal block (SSB) is a synchronization signal block (SSB) that has been visited by the terminal device 140, or the synchronization signal block (SSB) is a synchronization signal block (SSB) that has not been visited by the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the cell further includes information about stay time of the terminal device 140 on the synchronization signal block (SSB). The time information may include, for example, a moment at which the terminal device 140 enters the SSB and a moment at which the terminal device 140 leaves the SSB. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, in the first information, cells that have been visited by the terminal device 140 are arranged in a sequence in which the terminal device 140 visits the cells. Specifically, the cells that have been visited by the terminal device 140 may be arranged from last to first in the sequence in which the terminal device 140 visits the cells. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, in the first information, a cell that has not been visited by the terminal device 140 is after a cell that has been visited by the terminal device 140. Herein, the cell that has not been visited by the terminal device 140 is associated with the cell that has been visited by the terminal device 140. In some embodiments, the cell that has not been visited by the terminal device 140 is immediately after (immediately after) the cell that has been visited by the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the first network device 110 is an access and mobility management function (Access and Mobility Management Function, AMF) in a core network. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the communication method further includes: The first network device (namely, the AMF) receives, from a third network device 130, information including the first information, and the first network device 110 obtains the first information. In this manner, when a network releases a UE context corresponding to the terminal device 140, the third network device 130 notifies the first network device 110 of information about an SSB that last serves the terminal device 140 and/or information about an SSB on which the terminal device 140 may stay, and the first network device 110 forwards the information to the second network device 120 (the second network device 120 may be the third network device 130, or may not be the third network device 130). When paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information from the third network device 130 is carried in at least one of the following: a UE context release complete message, a UE context suspend request, a UE context resume request, or a message other than a UE context release complete message, a UE context suspend request, or a UE context resume request. In this manner, when the network releases the UE context corresponding to the terminal device 140, the third network device 130 notifies the first network device 110 (namely, the AMF) of the information about the SSB that last serves the terminal device 140 and/or the information about the SSB on which the UE may stay, and the first network device 110 forwards the information to the second network device 120 (the second network device 120 may be the third network device 130, or may not be the third network device 130). When paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, that the first network device 110 transmits the paging message 201 to the second network device 120 includes: The first network device 110 (namely, the AMF) parses the information from the third network device 130, and transmits the paging message 201 to the second network device 120; or the first network device 110 forwards the paging message 201 to the second network device 120 without parsing the information from the third network device 130. In this manner, when the network releases the UE context corresponding to the terminal device 140, the third network device 130 notifies the first network device 110 of the information about the SSB that last serves the terminal device 140 and/or the information about the SSB on which the terminal device 140 may stay, and the first network device 110 forwards the information to the second network device 120 (the second network device 120 may be the third network device 130, or may not be the third network device 130). When paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the third network device 130 is a network device that last serves the terminal device 140. In this manner, when the network releases the UE context corresponding to the terminal device, the third network device 130 notifies the first network device 110 (namely, the AMF) of the information about the SSB that last serves the terminal device 140 and/or the information about the SSB on which the terminal device 140 may stay, and the first network device 110 forwards the information to the second network device 120 (the second network device 120 may be the third network device 130, or may not be the third network device 130). When paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the second network device 120 is at least one of the following: the third network device 130, or a network device that is in a tracking area of the terminal device 140 and that is different from the third network device 130. In this manner, when the network releases the UE context corresponding to the terminal device 140, the third network device 130 notifies the first network device 110 (namely, the AMF) of the information about the SSB that last serves the terminal device 140 and/or the information about the SSB on which the terminal device 140 may stay, and the first network device 110 forwards the information to the second network device 120 (the second network device 120 may be the third network device 130, or may not be the third network device 130). When paging the terminal device 140, the first network device 110 and/or the second network device 120 may determine, based on the foregoing information, the SSBs on which the terminal device 140 is to be paged, and do/does not need to page the terminal device 140 on all the SSBs, thereby reducing energy consumption during network paging.

In some embodiments, the third network device 130 is one of the following: a base station in a non-split architecture, or a central unit (Centralized Unit, CU) of a base station in a split architecture. In this manner, when the network releases the UE context corresponding to the terminal device 140, the third network device 130 notifies the first network device 110 (namely, the AMF) of the information about the SSB that last serves the terminal device 140 and/or the information about the SSB on which the terminal device 140 may stay, and the first network device 110 forwards the information to the second network device 120 (the second network device 120 may be the third network device 130, or may not be the third network device 130). When paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, when the third network device 130 is the central unit (CU) of the base station in the split architecture, the information from the third network device 130 is obtained by the third network device 130 from a distributed unit (Distributed Unit, DU) of the base station in the split architecture. In this manner, when the network releases the UE context corresponding to the terminal device 140, the third network device 130 notifies the first network device 110 (namely, the AMF) of the information about the SSB that last serves the terminal device 140 and/or the information about the SSB on which the terminal device 140 may stay, and the first network device 110 forwards the information to the second network device 120 (the second network device 120 may be the third network device 130, or may not be the third network device 130). When paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the first network device 110 is a network device in an access network, and obtaining the first information of the terminal device 140 includes: The first network device 110 locally determines the first information. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the first network device 110 is a central unit (CU) of a base station in a split architecture, and the communication method further includes: The first network device 110 receives information from a distributed unit DU of the base station in the split architecture, where the information from the distributed unit DU includes the first information, and that the first network device 110 obtains the first information includes: The first network device 110 obtains the first information based on the information from the distributed unit DU. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the second network device 120 and the first network device 110 are in a same radio access network area. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the second network device 120 is a base station in a non-split architecture, and the first information is transmitted by the second network device 120 to the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, a sequence of synchronization signal blocks (SSBs) in the first information indicates a sequence in which the second network device 120 pages the terminal device 140 on the synchronization signal blocks (SSBs). In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

FIG. 11 is a flowchart of a method 1100 implemented at a second network device according to some embodiments of this application. The method 1100 may be implemented by a second network device (for example, a base station) 120 that is in a communication system 100 and that is in a non-split architecture on a RAN side, or may be implemented by a second network device 120 serving as a central unit of a base station in a split architecture. In another possible implementation, the method 1100 may alternatively be implemented by another electronic apparatus independent of the communication system 100. In an example, the following describes the method 1100 by using an example in which the method 1100 is implemented by the second network device 120 that is in the communication system 100 and that is in the non-split architecture on the RAN side or the second network device 120 serving as the central unit of the base station in the split architecture.

In 1110, the second network device 120 receives, from a first network device (for example, the first network device 110 shown in FIG. 1), a first paging message (for example, the RAN paging message 802 shown in FIG. 8) used to page a terminal device (for example, the terminal device 140 shown in FIG. 1), where the first paging message includes first information, and the first information indicates one or more synchronization signal blocks SSBs used to page the terminal device. In 1120, the second network device 120 determines, based on the first information, at least one SSB used to transmit a second paging message to the terminal device. In 1130, the second network device 120 transmits the second paging message (for example, the paging message 803 shown in FIG. 8) to the terminal device on the at least one SSB. In this manner, when paging the terminal device 140, the first network device 110 and/or the second network device 120 may determine, based on the first information, SSBs on which the terminal device 140 is to be paged (for example, the terminal device 140 is to be paged only on an SSB included in the first information), and do/does not need to page the terminal device 140 on all SSBs, thereby reducing energy consumption during network paging.

In some embodiments, determining the at least one SSB used to transmit the paging message 203 to the terminal device 140 includes: The second network device 120 selects, from the first information based on a cell identity of a cell associated with the second network device 120, the at least one SSB used to transmit the paging message 203 to the UE 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the first information includes information about the at least one determined SSB, and information about an SSB in the at least one determined synchronization signal block (SSB) includes: a cell identity that indicates a cell to which the SSB belongs, and an index of the SSB. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the cell identity is a cell global identity (CGI). In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the SSB further includes second information, and the second information indicates that the SSB is an SSB last used by the UE 140, or the SSB is an SSB not last used by the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the information about the SSB further includes information about stay time of the UE 140 on the SSB. The time information may include, for example, a moment at which the UE 140 enters the SSB and a moment at which the UE 140 leaves the SSB. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the information about the SSB further includes third information, and the third information indicates that the SSB is a synchronization signal block (SSB) that has been visited by the UE 140, or the synchronization signal block (SSB) is a synchronization signal block (SSB) that has not been visited by the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, a synchronization signal block (SSB) that has not been visited by the UE 140 is a synchronization signal block (SSB) adjacent to a synchronization signal block (SSB) that has been visited by the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, in the first information, synchronization signal blocks (SSBs) that have been visited by the UE 140 are arranged in a sequence in which the UE 140 visits the synchronization signal blocks (SSBs). In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, in the first information, a synchronization signal block (SSB) that has not been visited by the UE 140 is after a synchronization signal block (SSB) that has been visited by the UE 140, and the synchronization signal block (SSB) that has not been visited by the UE 140 is associated with the synchronization signal block (SSB) that has been visited by the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the first information includes information about at least one cell, the information about the at least one cell includes information about the synchronization signal block (SSB) used to page the UE 140, the at least one cell includes a cell that has been visited by the UE 140, and information about a cell in the at least one cell includes a cell identity. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the at least one cell further includes a cell that has not been visited by the UE 140, and the cell that has not been visited by the UE 140 is a cell adjacent to a cell that has been visited by the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the information about the cell further includes an index of the synchronization signal block (SSB). In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the information about the cell further includes fourth information, and the fourth information indicates that the synchronization signal block (SSB) is a synchronization signal block (SSB) that has been visited by the UE 140, or the synchronization signal block (SSB) is a synchronization signal block (SSB) that has not been visited by the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the information about the cell further includes the information about the stay time of the UE 140 on the synchronization signal block (SSB). The time information may include, for example, the moment at which the UE 140 enters the SSB and the moment at which the UE 140 leaves the SSB. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, in the first information, cells that have been visited by the UE 140 are arranged in a sequence in which the UE 140 visits the cells. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, in the first information, a cell that has not been visited by the UE 140 is after an associated cell that has been visited by the UE 140. Herein, the cell that has not been visited by the UE 140 is associated with the cell that has been visited by the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the first network device 110 is one of an access and mobility management function AMF in a core network, a base station in a non-split architecture, or a central unit (CU) of a base station in a split architecture. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the second network device 120 and the first network device 110 are in a same radio access network area. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the second network device 120 is a base station in a non-split architecture, and the second network device 120 transmits the paging message 203 to the UE 140. In this manner, when paging the terminal device 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the second network device 120 is a central unit (CU) of a base station in a split architecture, and the second network device 120 forwards the paging message 203 to a distributed unit DU of the base station in the split architecture, so that the distributed unit DU forwards the paging message 203 to the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, a sequence of synchronization signal blocks (SSBs) in the first information indicates a sequence in which the second network device 120 pages the UE 140 on the synchronization signal blocks (SSBs). In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

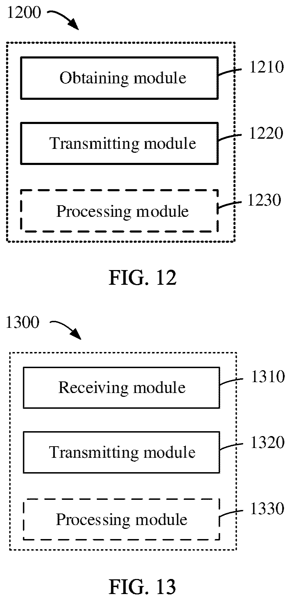

FIG. 12 is a block diagram of a first communication apparatus 1200 according to some embodiments of this application. The first communication apparatus 1200 may be implemented as a device or a chip in a device. The scope of this application is not limited in this aspect. The first communication apparatus 1200 may include a plurality of modules, configured to perform corresponding processing in the method 1000 discussed in FIG. 10. The first communication apparatus 1200 may be implemented as the first network device 110 shown in FIG. 1 or a part of the first network device 110 (for example, a CU in a split architecture). The following describes FIG. 12 with reference to FIG. 1, FIG. 2, and FIG. 10.

As shown in FIG. 12, the first communication apparatus 1200 includes an obtaining module (obtaining module) 1210 and a transmitting module (transmitting module) 1220. In some embodiments, the first communication apparatus 1200 may further include a processing module 1230. The obtaining module 1210 is configured to obtain data, the transmitting module 1220 is configured to transmit data, and the processing module 1230 is configured to process data. For example, the obtaining module 1210 is configured to obtain first information, where the first information indicates at least one synchronization signal block SSB used to page a terminal device (for example, the terminal device 140 shown in FIG. 1). The transmitting module 1220 is configured to transmit a paging message including the first information to a second network device (for example, the second network device 120 shown in FIG. 1). In this manner, when paging the terminal device 140, the first network device 110 and/or the second network device 120 may determine, based on the first information, SSBs on which the terminal device 140 is to be paged, and do/does not need to page the terminal device 140 on all SSBs, thereby reducing energy consumption during network paging.

FIG. 13 is a block diagram of a second communication apparatus 1300 according to some embodiments of this application. The second communication apparatus 1300 may be implemented as a device or a chip in a device. The scope of this application is not limited in this aspect. The second communication apparatus 1300 may include a plurality of modules, configured to perform corresponding processing in the method 1100 discussed in FIG. 11. The second communication apparatus 1300 may be implemented as the second network device 120 shown in FIG. 1 or a part of the second network device 120 (for example, a CU in a split architecture). The following describes FIG. 13 with reference to FIG. 1, FIG. 2, and FIG. 11.

As shown in FIG. 13, the second communication apparatus 1300 includes a receiving module (receiving module) 1310 and a transmitting module (transmitting module) 1320. In some embodiments, the second communication apparatus 1300 may further include a processing module 1330. The receiving module 1310 is configured to receive data, the transmitting module 1320 is configured to transmit data, and the processing module 1330 is configured to process data. For example, the receiving module 1310 is configured to receive, from a first network device (for example, the first network device 110 shown in FIG. 1), a first paging message (for example, the RAN paging message 802 shown in FIG. 8) used to page a terminal device (for example, the terminal device 140 shown in FIG. 1), where the first paging message includes first information, and the first information indicates one or more synchronization signal blocks SSBs used to page the terminal device. For example, the processing module 1330 determines, based on the first information, at least one SSB used to transmit a second paging message (for example, the paging message 803 shown in FIG. 8) to the terminal device. The transmitting module 1220 is configured to transmit the second paging message to the terminal device on the at least one SSB. In this manner, when paging the terminal device 140, the first network device 110 and/or the second network device 120 may determine, based on the first information, SSBs on which the terminal device 140 is to be paged, and do/does not need to page the terminal device 140 on all SSBs, thereby reducing energy consumption during network paging.

In some embodiments, the first information includes information about the at least one SSB, information about an SSB in the at least one synchronization signal block (SSB) may include a cell identity, and the cell identity indicates a cell to which the SSB belongs. The information about the SSB may further include an index of the SSB. In this manner, when paging the terminal device 140, the first network device 110 and/or the second network device 120 may determine, based on the first information, the SSBs on which the terminal device 140 is to be paged (for example, the terminal device 140 is to be paged only on an SSB included in the first information), and do/does not need to page the terminal device 140 on all the SSBs, thereby reducing energy consumption during network paging.

In some embodiments, the cell identity is a cell global identity (Cell Global Identity, CGI) of a cell to which the SSB belongs. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the SSB further includes second information, and the second information indicates that the SSB is an SSB last used by the terminal device 140 (that is, a last serving SSB of the terminal device 140), or the SSB is an SSB not last used by the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the SSB further includes information about stay time of the terminal device 140 on the SSB. For example, the time information may be an integer, indicating a corresponding quantity of seconds, a corresponding quantity of minutes, or the like. For another example, the time information may include, for example, a moment at which the terminal device 140 enters the SSB and a moment at which the terminal device 140 leaves the SSB. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the SSB further includes third information, and the third information indicates that the SSB is a visited (visited) synchronization signal block (SSB) for the terminal device 140, or the synchronization signal block (SSB) is a non-visited (non-visited) synchronization signal block (SSB) for the terminal device 140. Specifically, in some embodiments, SSBs that have been visited by the terminal device 140 may be arranged from last to first in a sequence in which the terminal device 140 visits the SSBs. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, a synchronization signal block (SSB) that has not been visited by the terminal device 140 is a synchronization signal block (SSB) adjacent to a synchronization signal block (SSB) that has been visited by the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, in the first information, synchronization signal blocks (SSBs) that have been visited by the terminal device 140 are arranged in a sequence in which the terminal device 140 visits the synchronization signal blocks (SSBs). In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, in the first information, a synchronization signal block (SSB) that has not been visited by the terminal device 140 is after a synchronization signal block (SSB) that has been visited by the terminal device 140. Herein, the SSB that has not been visited by the terminal device 140 is associated with the SSB that has been visited by the terminal device 140. For example, in some embodiments, the synchronization signal block (SSB) that has not been visited by the terminal device 140 is immediately after (immediately after) the synchronization signal block (SSB) that has been visited by the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the first information includes information about at least one cell, the information about the at least one cell includes information about the synchronization signal block (SSB) used to page the terminal device 140, the at least one cell includes a cell that has been visited by the terminal device 140, and information about a cell in the at least one cell includes a cell identity. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the at least one cell further includes a cell that has not been visited by the terminal device 140, and the cell that has not been visited by the terminal device 140 is a cell adjacent to a cell that has been visited by the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the cell further includes an index of the synchronization signal block (SSB). In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the cell further includes fourth information, and the fourth information indicates that the synchronization signal block (SSB) is a synchronization signal block (SSB) that has been visited by the terminal device 140, or the synchronization signal block (SSB) is a synchronization signal block (SSB) that has not been visited by the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the cell further includes the information about the stay time of the terminal device 140 on the synchronization signal block (SSB). For example, the time information may be an integer, indicating a corresponding quantity of seconds, a corresponding quantity of minutes, or the like. For another example, the time information may include, for example, the moment at which the terminal device 140 enters the SSB and the moment at which the terminal device 140 leaves the SSB. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, in the first information, cells that have been visited by the terminal device 140 are arranged in a sequence in which the terminal device 140 visits the cells. Specifically, the cells that have been visited by the terminal device 140 may be arranged from last to first in the sequence in which the terminal device 140 visits the cells. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, in the first information, a cell that has not been visited by the terminal device 140 is after a cell that has been visited by the terminal device 140. Herein, the cell that has not been visited by the terminal device 140 is associated with the cell that has been visited by the terminal device 140. In some embodiments, the cell that has not been visited by the terminal device 140 is immediately after (immediately after) the cell that has been visited by the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the first network device 110 is an access and mobility management function (Access and Mobility Management Function, AMF) in a core network. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, an obtaining module 1210 further includes a receiving module, the receiving module receives information including the first information from the third network device 130, and the first network device 110 obtains the first information. In this manner, when a network releases a UE context corresponding to the terminal device 140, a third network device 130 notifies the first network device 110 of information about an SSB that last serves the terminal device 140 and/or information about an SSB on which the terminal device 140 may stay, and the first network device 110 forwards the information to the second network device 120. When paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, information from the third network device 130 is carried in at least one of the following: a UE context release complete message, a UE context suspend request, a UE context resume request, or a message other than a UE context release complete message, a UE context suspend request, or a UE context resume request. In this manner, when the network releases the UE context corresponding to the terminal device 140, the third network device 130 notifies the first network device 110 (namely, the AMF) of the information about the SSB that last serves the terminal device 140 and/or the information about the SSB on which the UE may stay, and the first network device 110 forwards the information to the second network device 120. When paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the transmitting module 1220 parses the information from the third network device 130, and the first network device 110 transmits a paging message 201 to the second network device 120. Alternatively, the first network device 110 may not parse the information from the third network device 130, and the transmitting module 1220 forwards the paging message 201 to the second network device 120. In this manner, when the network releases the UE context corresponding to the terminal device 140, the third network device 130 notifies the first network device 110 of the information about the SSB that last serves the terminal device 140 and/or the information about the SSB on which the terminal device 140 may stay, and the first network device 110 forwards the information to the second network device 120 (the second network device 120 may be the third network device 130, or may not be the third network device 130). When paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the third network device 130 is a network device that last serves the terminal device 140. In this manner, when the network releases the UE context corresponding to the terminal device, the third network device 130 notifies the first network device 110 (namely, the AMF) of the information about the SSB that last serves the terminal device 140 and/or the information about the SSB on which the terminal device 140 may stay, and the first network device 110 forwards the information to the second network device 120 (the second network device 120 may be the third network device 130, or may not be the third network device 130). When paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the second network device 120 may be the third network device 130. Alternatively, the second network device 120 may be a network device that is in a tracking area of the terminal device 140 and that is different from the third network device 130. In this manner, when the network releases the UE context corresponding to the terminal device 140, the third network device 130 notifies the first network device 110 (namely, the AMF) of the information about the SSB that last serves the terminal device 140 and/or the information about the SSB on which the terminal device 140 may stay, and the first network device 110 forwards the information to the second network device 120 (the second network device 120 may be the third network device 130, or may not be the third network device 130). When paging the terminal device 140, the first network device 110 and/or the second network device 120 may determine, based on the foregoing information, the SSBs on which the terminal device 140 is to be paged, and do/does not need to page the terminal device 140 on all the SSBs, thereby reducing energy consumption during network paging.

In some embodiments, the third network device 130 may be a base station with a non-split architecture. Alternatively, the third network device 130 may be a central unit (Centralized Unit, CU) of a base station in a split architecture. In this manner, when the network releases the UE context corresponding to the terminal device 140, the third network device 130 notifies the first network device 110 (namely, the AMF) of the information about the SSB that last serves the terminal device 140 and/or the information about the SSB on which the terminal device 140 may stay, and the first network device 110 forwards the information to the second network device 120 (the second network device 120 may be the third network device 130, or may not be the third network device 130). When paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, when the third network device 130 is the central unit (CU) of the base station in the split architecture, the information from the third network device 130 is obtained by the third network device 130 from a distributed unit (Distributed Unit, DU) of the base station in the split architecture. In this manner, when the network releases the UE context corresponding to the terminal device 140, the third network device 130 notifies the first network device 110 (namely, the AMF) of the information about the SSB that last serves the terminal device 140 and/or the information about the SSB on which the terminal device 140 may stay, and the first network device 110 forwards the information to the second network device 120 (the second network device 120 may be the third network device 130, or may not be the third network device 130). When paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the first network device 110 is a network device in an access network, and the first network device 110 obtains the first information of the terminal device 140 by locally determining the first information. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the first network device 110 is a central unit (CU) of a base station in a split architecture, an obtaining module 1210 includes a receiving module, and the receiving module receives information from a distributed unit DU of the base station in the split architecture. The information from the distributed unit DU includes the first information. The receiving module receives the information from the distributed unit DU, and the first network device 110 may obtain the first information based on the information from the distributed unit DU. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the second network device 120 and the first network device 110 are in a same radio access network area. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the second network device 120 is a base station in a non-split architecture, and the first information is transmitted by the second network device 120 (specifically, a transmitting module 1320 of the second network device 120) to the terminal device 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, a sequence of synchronization signal blocks (SSBs) in the first information indicates a sequence in which the second network device 120 pages the terminal device 140 on the synchronization signal blocks (SSBs). In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, to determine the at least one SSB used to transmit the paging message to the terminal device 140, the second network device 120 selects, from the first information based on a cell identity of a cell associated with the second network device 120, the at least one SSB used to transmit the paging message to the UE 140. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the first information includes information about at least one determined SSB, information about an SSB in the at least one determined synchronization signal block (SSB) may include a cell identity, and the cell identity indicates a cell to which the SSB belongs. The information about the SSB may further include an index of the SSB. In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the cell identity is a cell global identity (CGI). In this manner, when paging the terminal device 140, the first network device 110 and/or the second network device 120 may determine, based on the first information, the SSBs on which the terminal device 140 is to be paged, and do/does not need to page the terminal device 140 on all the SSBs, thereby reducing energy consumption during network paging.

In some embodiments, the information about the SSB further includes the second information, and the second information indicates that the SSB is an SSB last used by the UE 140, or the SSB is an SSB not last used by the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the information about the SSB further includes the information about the stay time of the UE 140 on the SSB. For example, the time information may be an integer, indicating a corresponding quantity of seconds, a corresponding quantity of minutes, or the like. For another example, the time information may include, for example, the moment at which the UE 140 enters the SSB and the moment at which the UE 140 leaves the SSB. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the information about the SSB further includes the third information, and the third information indicates that the SSB is a synchronization signal block (SSB) that has been visited by the UE 140, or the synchronization signal block (SSB) is a synchronization signal block (SSB) that has not been visited by the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, a synchronization signal block (SSB) that has not been visited by the UE 140 is a synchronization signal block (SSB) adjacent to a synchronization signal block (SSB) that has been visited by the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, in the first information, synchronization signal blocks (SSBs) that have been visited by the UE 140 are arranged in a sequence in which the UE 140 visits the synchronization signal blocks (SSBs). In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, in the first information, a synchronization signal block (SSB) that has not been visited by the UE 140 is after a synchronization signal block (SSB) that has been visited by the UE 140, and the synchronization signal block (SSB) that has not been visited by the UE 140 is associated with the synchronization signal block (SSB) that has been visited by the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the first information includes information about at least one cell, the information about the at least one cell includes information about the synchronization signal block (SSB) used to page the UE 140, the at least one cell includes a cell that has been visited by the UE 140, and information about a cell in the at least one cell includes a cell identity. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the at least one cell further includes a cell that has not been visited by the UE 140, and the cell that has not been visited by the UE 140 is a cell adjacent to a cell that has been visited by the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the information about the cell further includes an index of the synchronization signal block (SSB). In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the information about the cell further includes fourth information, and the fourth information indicates that the synchronization signal block (SSB) is a synchronization signal block (SSB) that has been visited by the UE 140, or the synchronization signal block (SSB) is a synchronization signal block (SSB) that has not been visited by the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the information about the cell further includes the information about the stay time of the UE 140 on the synchronization signal block (SSB). For example, the time information may be an integer, indicating a corresponding quantity of seconds, a corresponding quantity of minutes, or the like. For another example, the time information may include, for example, the moment at which the UE 140 enters the SSB and the moment at which the UE 140 leaves the SSB. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, in the first information, cells that have been visited by the UE 140 are arranged in a sequence in which the UE 140 visits the cells. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, in the first information, a cell that has not been visited by the UE 140 is after an associated cell that has been visited by the UE 140. Herein, the cell that has not been visited by the UE 140 is associated with the cell that has been visited by the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the first network device 110 is one of an access and mobility management function AMF in a core network, a base station in a non-split architecture, or a central unit (CU) of a base station in a split architecture. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the second network device 120 and the first network device 110 are in a same radio access network area. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the second network device 120 is a base station of a non-split architecture, and the second network device 120 (specifically, the transmitting module 1320 of the second network device 120) transmits the paging message to the UE 140. In this manner, when paging the terminal device 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, the second network device 120 is a central unit (CU) of a base station in a split architecture, and the second network device 120 (specifically, the transmitting module 1320 of the second network device 120) forwards the paging message 203 to a distributed unit DU of the base station in the split architecture, so that the distributed unit DU forwards the paging message 203 to the UE 140. In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

In some embodiments, a sequence of synchronization signal blocks (SSBs) in the first information indicates a sequence in which the second network device 120 pages the UE 140 on the synchronization signal blocks (SSBs). In this manner, when paging the UE 140, the first network device 110 and/or the second network device 120 may determine, based on the first information, the SSBs on which the UE 140 is to be paged, and do/does not need to page the UE 140 on all the SSBs, thereby reducing energy consumption during network paging.

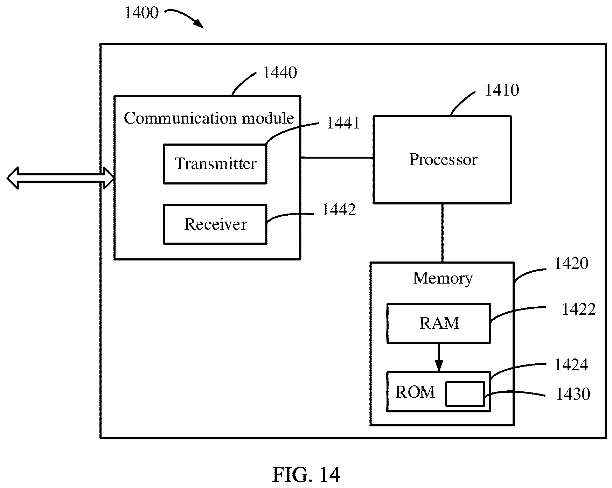

FIG. 14 is a simplified block diagram of an example device 1400 suitable for implementing embodiments of this application. The device 1400 may be configured to implement the first network device 110, the second network device 120, the third network device 140, or the communication system 100 shown in FIG. 1. As shown in the figure, the device 1400 includes one or more processors 1410, one or more memories 1420 coupled to the processors 1410, and a communication module 1440 coupled to the processors 1410. In some embodiments, the memory 1420 and the processor 1410 may be integrated together.

The communication module 1440 may be configured to perform bidirectional communication. The communication module 1440 may include a transmitter 1441 configured to transmit data and a receiver 1442 configured to receive data.

The processor 1410 may be any type applicable to a local technology network, and may include but is not limited to at least one of the following: one or more of a general-purpose computer, a dedicated computer, a microcontroller, a digital signal processor (Digital Signal Processor, DSP), or a control-based multi-core controller architecture. The device 900 may have a plurality of processors, such as an application-specific integrated circuit chip, which in time belongs to a clock synchronized with a main processor.

The memory 1420 may include one or more non-volatile memories and one or more volatile memories. An example of the non-volatile memory includes but is not limited to at least one of the following: a read-only memory (Read-Only Memory, ROM) 1424, an erasable programmable read-only memory (Erasable Programmable Read-Only Memory, EPROM), a flash memory, a hard disk, a compact disc (Compact Disc, CD), a digital versatile disc (Digital Versatile Disc, DVD), or other magnetic storage and/or optical storage. Examples of the volatile memory include but are not limited to at least one of the following: a random access memory (Random Access Memory, RAM) 1422, or another volatile memory that does not persist during a power failure.

A computer program 1430 includes computer-executable instructions executed by an associated processor 1410. The program 1430 may be stored in the ROM 1420. The processor 1410 may perform any suitable actions and processing by loading the program 1430 into the RAM 1420.

Embodiments of this application may be implemented by using the program 1430, so that the device 1400 can perform any process discussed with reference to FIG. 2, FIG. 5, or FIG. 7 to FIG. 9. Embodiments of this application may alternatively be implemented by hardware or a combination of software and hardware.

In some embodiments, the program 1430 may be tangibly included in a computer-readable medium, and the computer-readable medium may be included in the device 1400 (for example, in the memory 1420) or another storage device that may be accessed by the device 1200. The program 1430 may be loaded from the computer-readable medium into the RAM 1422 for execution. The computer-readable medium may include any type of tangible non-volatile memory, for example, a ROM, an EPROM, a flash memory, a hard disk, a CD, or a DVD.

Usually, various embodiments of this application may be implemented by hardware or a dedicated circuit, software, logic, or any combination thereof. Some aspects may be implemented by hardware, and other aspects may be implemented by firmware or software, and may be executed by a controller, a microprocessor, or another computing device. Although aspects of embodiments of this application are shown and described as block diagrams or flowcharts, or represented by some other illustrations, it should be understood that the blocks, apparatuses, systems, technologies, or methods described in this specification may be implemented as, for example, nonlimiting examples, hardware, software, firmware, dedicated circuits or logic, general-purpose hardware, controllers, other computing devices, or a combination thereof.

This application further provides at least one computer program product tangibly stored on a non-transitory computer-readable storage medium. The computer program product includes computer-executable instructions, for example, instructions included in a program module, and the instructions are executed in a device on a real or virtual processor of a target, to perform the foregoing processes/methods with reference to FIG. 2, FIG. 5, and FIG. 7 to FIG. 9. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions used for the program module may be executed locally or in a distributed device. In the distributed device, the program module may be locally located and located in a remote storage medium.

Computer program code for implementing the methods in this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, executed partially on a computer, executed as a standalone software package, executed partially on a computer and partially on a remote computer, or executed entirely on a remote computer or a server.

In the context of this application, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores a program used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the methods in this application are described in a particular order in the accompanying drawings, this does not require or imply that these operations need to be performed in the particular order, or that all of the shown operations need to be performed to achieve a desired result. Instead, execution orders of the steps depicted in the flowcharts may change. Additionally or alternatively, some steps may be omitted, a plurality of steps may be combined into one step for execution, and/or one step may be broken down into a plurality of steps for execution. It should be further noted that features and functions of two or more apparatuses according to this application may be embodied in one apparatus. Instead, features and functions of one apparatus described above may be further divided into being embodied in a plurality of apparatuses.

The foregoing has described the implementations of this application. The foregoing descriptions are examples, are not exhaustive, and are not limited to the disclosed implementations. Without departing from the scope of the described implementations, many modifications and variations are apparent to a person of ordinary skill in the art. Selection of the terms used in this specification is intended to well explain principles of the implementations, actual applications, or improvements to technologies in the market, or to enable another person of ordinary skill in the art to understand the implementations disclosed in this specification.

## Claims

1. A communication method, comprising:
obtaining, by a first network device, first information of a terminal device, wherein the first information indicates at least one synchronization signal block SSB used to page the terminal device; and
transmitting, by the first network device to a second network device, a paging message used to page the terminal device, wherein the paging message comprises the first information.

2. The method according to claim 1, wherein obtaining, by the first network device, the first information comprises one of the following:
receiving, by the first network device, information from a third network device, wherein the information from the third network device comprises the first information; or
locally determining, by the first network device, the first information.

3. The method according to claim 2, wherein the information from the third network device is carried in at least one of the following:
a UE context release complete message;
a UE context suspend request;
a UE context resume request; or
a message other than a UE context release complete message, a UE context suspend request, and a UE context resume request.

4. The method according to claim 2, wherein transmitting, by the first network device, the paging message to the second network device comprises:
transmitting, by the first network device, the paging message to the second network device by parsing the information from the third network device; or
forwarding, by the first network device, the paging message to the second network device without parsing the information from the third network device.

5. The method according to claim 2, wherein the third network device is a network device that last serves the terminal device;
the third network device is one of the following: a base station in a non-split architecture or a central unit CU of a base station in a split architecture; and
when the third network device is the central unit CU of the base station in the split architecture, the information from the third network device is obtained by the third network device from a distributed unit DU of the base station in the split architecture.

6. A communication method, comprising:
receiving, by a second network device from a first network device, a first paging message used to page a terminal device, wherein the first paging message comprises first information, and the first information indicates one or more synchronization signal blocks SSBs used to page the terminal device;
determining, by the second network device based on the first information, at least one SSB used to transmit a second paging message to the terminal device; and
transmitting, by the second network device, the second paging message to the terminal device on the at least one SSB.

7. The method according to claim 6, wherein determining the at least one SSB used to transmit the second paging message to the terminal device comprises:
determining, by the second network device from the first information based on a cell identity of a cell associated with the second network device, the at least one SSB used to transmit the second paging message to the terminal device.

8. The method according to claim 1 or 6, wherein the first information comprises information about the at least one SSB, and information about an SSB in the at least one synchronization signal block SSB comprises:
a cell identity that indicates a cell to which the SSB belongs; and
an index of the SSB.

9. The method according to claim 8, wherein the cell identity is a cell global identity CGI.

10. The method according to claim 8, wherein the information about the SSB further comprises second information; and
the second information indicates that the SSB is an SSB last used by the terminal device, or the SSB is an SSB not last used by the terminal device.

11. The method according to claim 8, wherein the information about the SSB further comprises:
information about stay time of the terminal device on the SSB.

12. The method according to claim 8, wherein the information about the SSB further comprises third information; and
the third information indicates that the SSB is a synchronization signal block SSB that has been visited by the terminal device, or the synchronization signal block SSB is a synchronization signal block SSB that has not been visited by the terminal device.

13. The method according to claim 12, wherein in the first information, synchronization signal blocks SSBs that have been visited by the terminal device are arranged in a sequence in which the terminal device visits the synchronization signal blocks SSBs.

14. The method according to claim 13, wherein in the first information, a synchronization signal block SSB that has not been visited by the terminal device is after a synchronization signal block SSB that has been visited by the terminal device, and the synchronization signal block SSB that has not been visited by the terminal device is associated with the synchronization signal block SSB that has been by the terminal device.

15. The method according to claim 1 or 6, wherein the first information comprises information about at least one cell, and the information about the at least one cell comprises information about the synchronization signal block SSB used to page the terminal device; and
the at least one cell comprises a cell that has been visited by the terminal device, and information about a cell in the at least one cell comprises a cell identity.

16. The method according to claim 15, wherein the at least one cell further comprises a cell that has not been visited by the terminal device, and the cell that has not been visited by the terminal device is a cell adjacent to the cell that has been visited by the terminal device.

17. The method according to claim 15, wherein the information about the cell further comprises an index of the synchronization signal block SSB.

18. The method according to claim 17, wherein the information about the cell further comprises fourth information; and
the fourth information indicates that the synchronization signal block SSB is a synchronization signal block SSB that has been visited by the terminal device, or the synchronization signal block SSB is a synchronization signal block SSB that has not been visited by the terminal device.

19. The method according to claim 17, wherein the information about the cell further comprises information about stay time of the terminal device on the synchronization signal block SSB.

20. The method according to any one of claims 15 to 19, wherein in the first information, cells that have been visited by the terminal device are arranged in a sequence in which the terminal device visits the cells.

21. The method according to claim 20, wherein in the first information, a cell that has not been visited by the terminal device is after a cell that has been visited by the terminal device, and the cell that has not been visited by the terminal device is associated with the cell that has been visited by the terminal device.

22. The method according to any one of claims 1 to 21, wherein the first network device is one of the following: an access and mobility management function AMF in a core network, a base station in a non-split architecture, or a central unit CU of a base station in a split architecture.

23. The method according to any one of claims 1 to 21, wherein the second network device and the first network device are in a same radio access network area.

24. The method according to any one of claims 13, 14, 20, and 21, wherein a sequence of synchronization signal blocks SSBs in the first information indicates a sequence in which the second network device pages the terminal device on the synchronization signal blocks SSBs.

25. A first communication apparatus, comprising a processor and a memory, wherein the memory stores instructions executed by the processor, and when the instructions are executed by the processor, the first communication apparatus is caused to implement the method according to any one of claims 1 to 5.

26. A second communication apparatus, comprising a processor and a memory, wherein the memory stores instructions executed by the processor, and when the instructions are executed by the processor, the second communication apparatus is caused to implement the method according to any one of claims 6 to 24.

27. A communication system, comprising the first communication apparatus according to claim 25 and the second communication apparatus according to claim 26, wherein the communication system is configured to implement the method according to any one of claims 1 to 24 by using the first communication apparatus and the second communication apparatus.

28. A computer-readable storage medium, wherein the computer-readable storage medium stores a computer program, and when the computer program is executed by a processor, the method according to any one of claims 1 to 24 is implemented.

29. A chip, comprising a processing circuit, configured to perform the method according to any one of claims 1 to 24.

30. A computer program product, tangibly stored on a computer-readable medium and comprising computer executable instructions, wherein when the computer executable instructions are executed, a device is caused to implement the method according to any one of claims 1 to 24.
